# EUROPÄISCHE PATENTSCHRIFT

(11) **EP 1 680 613 B1**
(45) Veröffentlichungstag und Bekanntmachung des Hinweises auf die Patenterteilung: **11.12.2013**
(21) Anmeldenummer: 04765843.0
(22) Anmeldetag: 06.10.2004
(51) Int. Cl.: F16J 15/16, F16J 15/43

(54) **VORRICHTUNG UND VERFAHREN ZUM FÜHREN ZUMINDEST ZWEIER STRÖMUNGSMITTEL**
DEVICE AND METHOD FOR GUIDING AT LEAST TWO FLOW MEDIA
DISPOSITIF ET PROCEDE DE GUIDAGE D'AU MOINS DEUX FLUIDES

(30) Priorität: 29.10.2003 DE 20316689 U; 09.06.2004 DE 202004009146 U
(43) Veröffentlichungstag der Anmeldung: 19.07.2006
(73) Patentinhaber: Allweiler GmbH, 78315 Radolfzell (DE)
(72) Erfinder: WERNER, Stefan, 78478 Allensbach (DE)
(74) Vertreter: Wagner, Kilian
(86) Internationale Anmeldenummer: PCT/EP2004/011146
(87) Internationale Veröffentlichungsnummer: WO 2005/047741

(56) Entgegenhaltungen:
- EP-A- 0 426 041
- DE-A- 2 143 736
- DE-U- 29 606 679
- GB-A- 783 881
- US-A- 4 561 679
- PATENT ABSTRACTS OF JAPAN Bd. 0030, Nr. 53 (M-058), 8. Mai 1979 (1979-05-08) -& JP 54 030347 A (FUJI ELECTRIC CO LTD), 6. März 1979 (1979-03-06)
- PATENT ABSTRACTS OF JAPAN Bd. 0093, Nr. 22 (M-440), 18. Dezember 1985 (1985-12-18) & JP 60 155064 A (MITSUBISHI DENKI KK), 14. August 1985 (1985-08-14)
- PATENT ABSTRACTS OF JAPAN Bd. 0093, Nr. 22 (M-440), 18. Dezember 1985 (1985-12-18) & JP 60 155063 A (MITSUBISHI DENKI KK), 14. August 1985 (1985-08-14)
- PATENT ABSTRACTS OF JAPAN Bd. 003, Nr. 158 (M-086), 25. Dezember 1979 (1979-12-25) & JP 54 135963 A (FUJI ELECTRIC CO LTD), 22. Oktober 1979 (1979-10-22)

## Beschreibung

Die Erfindung betrifft eine Vorrichtung und ein Verfahren zum Führen zumindest zweier Strömungsmittel unterschiedlichen Druckes nach dem Oberbegriff des Anspruches 1.

Die Durchführung von Bewegungen und Kräften durch druckhaltende Begrenzungswände zwischen zwei Fluidsystemen wie Gasen und Flüssigkeiten unterschiedlichen Drucks wird in herkömmlicher Art im wesentlichen durch wellen- und Stangendichtungen wie Stopfbuchsen, Dichtringe und Gleitringdichtungen verwirklicht. Auf der Niederdruckseite findet man meist Umgebungsluft unter Umgebungsdruck. Bei Vakuumsystemen ist die Umgebungsluft auf der Hochdruckseite. Die genannten Dichtungsarten benötigen für ihre einwandfreie Funktion einen gewissen Leckagefluss von der Seite höheren zur Seite niederen Druckes, da es sich um berührende Dichtungen handelt, die eines Schmiermediums bedürfen, um im Betrieb nicht zerstört zu werden.

Bei vielen Anwendungen ist solch eine Leckage aber nicht erwünscht oder sogar nicht zulässig, weil das Fluid z.B. toxisch, geruchsbelästigend oder explosiv ist, oder weil ein Hochvakuum aufrecht erhalten werden soll. Doppelsysteme mit Sperrmedien -- beispielsweise doppeltwirkende Gleitringdichtungen -- mögen die Leckage reduzieren bzw. die Leckage des Druckfluids durch die Leckage eines weniger schädlichen Sperrfluids substituieren.

Technisch leckagefreie Durchführungen werden heute im wesentlichen nach drei Prinzipien realisiert: Spaltrohrmotor, Magnetkupplung und magnetofluidische Dichtung.

Beim Spaltrohrmotor ist der Motor Teil der Maschine, des Apparates oder des Gerätes, z.B. oft verwendet in einer Pumpe. Der Stator ist auf der Niederdruckseite der Pumpe positioniert und durch ein nichtmagnetisierbares Spaltrohr von der Hochdruckseite isoliert. Der Rotor befindet sich innerhalb der Hochdruckseite der Pumpe. Das Drehmoment wird über elektromagnetische Kräfte durch das Spaltrohr berührungsfrei vom Stator auf den Rotor übertragen.

Die ebenfalls im Pumpenbau gebräuchliche Magnetkupplung funktioniert nach einem ähnlichen Prinzip, jedoch befindet sich auf der Niederdruckseite der Pumpe statt einer Statorwicklung ein Außenrotor mit einer Anordnung von Permanentmagneten, der eine entsprechende Anordnung von Permanentmagneten bzw. ein Induktionskäfig oder -ring auf der Rotorseite gegenübersteht. Der Außenrotor ist mit einem herkömmlichen Motor verbunden, der das Drehmoment erzeugt, das über magnetische Feldlinien -- wieder berührungsfrei -- auf den Rotor übertragen wird. Die beiden Kupplungselemente sind meist durch ein topfförmig gestaltetes Gehäuseelement, einen Spalttopf, gegeneinander druckisoliert.

Bei der Durchführung auf Basis von Magnetofluid bildet eine magnetisierbare Flüssigkeit -- meist eine Dispersion feinster ferromagnetischer Partikel mit Hilfe eines Hilfsstoffes in einem Trägeröl -- ein äußerst flexibles und anpassungsfähiges undurchlässiges Dichtelement, z.B. in Form eines "flüssigen O-ringes" zwischen Welle und Gehäuse, das durch ein entsprechend gestaltetes Magnetfeld am Ort des abzudichtenden Spaltes fixiert wird. Diese Dichtungsart wird kommerziell etwa in Festplattenlaufwerken und Vakuumdurchführungen in der Oberflächentechnik verwendet.

Die genannten leckagefreien Durchführungsarten haben insbesondere für den Pumpenbau mehrere Nachteile; sowohl Spaltrohrmotor als auch Magnetkupplung benötigen zur Lagerung des Rotors Lagerelemente, die vom Fördermedium der Pumpe selbst geschmiert werden müssen und somit sehr störungsanfällig sind. Der Vorteil der Magnetkupplung, nämlich die Verwendbarkeit von Normmotoren, ist beim Spaltrohrmotor nicht gegeben. Demgegenüber weist die Magnetkupplung den Nachteil auf, dass bei unterschiedlicher zu übertragender Leistung nicht nur unterschiedliche Motoren, sondern auch unterschiedlich dimensionierte Kupplungen eingesetzt werden müssen, um bei kleinen Leistungen.keinen Preisnachteil in Kauf nehmen zu müssen. Beide Prinzipien sind durch die Art der Drehmomentübertragung und der Lagerung in ihrer Möglichkeit zur Leistungsübertragung aufgrund des überproportional steigenden Aufwandes bei hohen Leistungen begrenzt. Insbesondere sind hohe Wirbelstromverluste nachteilig, die in Spaltrohren und Spalttöpfen in herkömmlicher Bauart in nichtmagnetischen Metalllegierungen induziert werden.

Magnetofluidische Dichtungen sind in ihrer Anwendbarkeit auf geringe Differenzdrücke begrenzt. Beispielsweise sind für die Abdichtung von 1 bar gegenüber Vakuum sechs hintereinander geschaltete Dichtelemente notwendig. Der übliche Druckbereich für einstufige Kreiselpumpen geht jedoch bereits bis 25 bar und für Sonderanwendungen sowie andere Pumpensysteme weit darüber hinaus. Außerdem müssen die chemische Verträglichkeit sowie Mischvorgänge zwischen den beteiligten Fluiden und dem Magnetofluid beachtet werden.

Aus der EP 0 426 041 A1 ist bereits ein Verfahren zum Führen von gasförmigem Strömungsmittel mit unterschiedlichen Drücken unter Verwendung von Dichtungselementen bekannt. Eine leckagefreie Ausbildung der Dichtungselemente ist jedoch der Schrift nicht entnehmbar.

Aus der GB 783881 A ist bereits eine Vorrichtung nach dem Oberbegriff des Anspruchs 1 bekannt. Bei der aus dieser Schrift bekannten Vorrichtung ist eine Fördereinrichtung vorgesehen, die für unterschiedliche Drücke innerhalb der Teilräume sorgt. Hierbei ist die Fördereinrichtung außerhalb der eigentlcihen Lagereinrichtung angeordnet und mittels einer Leitung mit einem der Teilräume verbunden. Ebenfalls ist aus den PATENT ABSTRACTS OF JAPAN Bd. 003, Nr. 158 (M-086), 25. Dezember 1979 eine Vorrichtung nach dem Oberbegriff des Anspruchs 1 bekannt. Auch bei dieser vorbekannten Vorrichtung ist die Fördereinrichtung als separate Einrichtung außerhalb der Teilräume angeordnet. Ausgehend von dem dargestellten Stand der Technik liegt der Erfindung daher die Aufgabe zugrunde, eine Vorrichtung nach dem Oberbegriff des Anspruchs 1 derart weiterzubilden, dass sie besonders kompakt baut. Diese Aufgabe wird bei einer Vorrichtung mit den Merkmalen des Anspruchs 1 gelöst. Vorteilhafte Weiterbildungen der erfindungsgemäßen Vorrichtung sind in den Unteransprüchen angegeben.

Zur Lösung dieser Aufgabe führen die Lehren der unabhängigen Ansprüche; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale. Bei angegebenen Bemessungsbereichen sollen auch innerhalb der genannten Grenzen liegende Werte als Grenzwerte offenbart und beliebig einsetzbar sein.

Erfindungsgemäß sind zwischen einem kraftübertragenden Organ, beispielsweise einer Welle, und einem druckisolierenden Element wie einem Gehäuse od.dgl. Dichtungsmittel oder -elemente so angeordnet, dass drei -- insbesondere in Achsrichtung nebeneinander liegende -- Räume entstehen: ein Bereich mit einem ersten Fluid bestimmten Druckes -- beispielsweise einem Fördermedium mit 25 bar --, ein Bereich für ein zweites Fluid mit einem Differenzdruck zum ersten Fluid -- etwa Umgebungsluft mit 1 bar absolut -- sowie ein zwischen diesen Bereichen angeordneter dritter Raum für ein Hilfsmittel bzw. eine Hilfsflüssigkeit. Letzterer wird durch eine Einrichtung in zwei Teilräume für zwei unterschiedliche Druckbereiche unterteilt.

Die Hilfsflüssigkeit kann beispielsweise ein Silikonöl sein, das auch als Trägeröl ein Magnetofluid eingesetzt wird; denn es hat sich als günstig erwiesen, magnetofluidische Dichtungsmittel einzusetzen, dies insbesondere zum Begrenzen des Raumes für die Hilfsflüssigkeit. Diese magnetofluidische Dichtung sperrt den Raum hermetisch ab.

Im Bereich mit der Hilfsflüssigkeit bzw. dem Hilfsfluid befinden sich Mittel, die innerhalb dieses Bereiches einen Differenzdruck erzeugen, wobei der höhere Druck auf der Seite zum Fluid mit dem höheren Druck hin und umgekehrt erzeugt wird. Die erzeugbare Druckdifferenz muss mindestens dem maximal auftretenden Differenzdruck zwischen dem ersten sowie dem zweiten Fluid entsprechen.

Vorteilhafterweise soll dem Raum höheren Drucks ein Fördermedium sowie dem Raum niederen Drucks Umgebungsluft zugeordnet sein. Die Hilfsflüssigkeit soll ein Trägeröl des dem Dichtungselement zugeordneten Magnetofluids sein, gegebenenfalls ein Silikonöl.

Erfindungsgemäß weist der Raum für die Hilfsflüssigkeit zwei Anschlüsse auf, von denen einer zum Erzeugen eines Vakuums sowie der andere als Durchgang für die Hilfsflüssigkeit ausgebildet ist. Zudem soll der Teilraum für den höheren Druck der Hilfsflüssigkeit dem Raum für das Fluid höheren Druckes zugeordnet sein.

Auch zeichnet sich der Erfindungsgegenstand durch relativ zueinander bewegbare, dem druckisolierenden Element und dem kraftübertragenden Organ zugeordnete geometrische Teile aus, die zum Erzeugen einer Durckdifferenz eine Fördereinrichtung für die Hilfsflüssigkeit bilden. Die den Raum für die Hilfsflüssigkeit teilende Einrichtung ist bevorzugt eine Fördereinrichtung.

Die Druckdifferenz innerhalb der Hilfsflüssigkeit wird günstigerweise durch Relativbewegungen geometrischer Teile erzeugt, die dem kraftübertragenden Organ und dem druckisolierenden Element -- dem Gehäuse -- statisch zugeordnet sind und eine Fördereinrichtung, etwa eine Pumpe, für die Hilfsflüssigkeit bilden. Dabei wird durch geeignete Maßnahmen -- z.B. die Anordnung eines Rückschlagventilssichergestellt, dass bei Stillstand des Systems kein Druckausgleich zwischen Hoch- und Niederdruckbereich der Hilfsflüssigkeit stattfindet.

Nach einem anderen Merkmal der Erfindung entspricht die erzeugbare Druckdifferenz zumindest dem maximal auftretenden Differenzdruck zwischen den Fluiden.

Erfindungsgemäß sind weiterhin Mittel vorgesehen, die auf den Differenzdruck zwischen dem Fluid mit hohem Druck und dem Maximaldruck der Hilfsflüssigkeit reagieren. Die Reaktion wird erfindungsgemäß dazu genutzt, um durch geeignete Mittel die genannte Druckdifferenz auf einen Wert nahe Null zu regeln. Dies kann z.B. durch Regelung der Leistung der die Druckdifferenz erzeugenden Mittel geschehen oder durch Regelung einer Rückströmung aus dem Bereich hohen Druckes der Hilfsflüssigkeit zum Bereich niedrigen Druckes. Es sind Organe zum Regeln der Leistung der die Druckdifferenz erzeugenden Mittel vorhanden oder Organe zum Regeln einer Rückströmung aus dem Teilraum höheren Drucks der Hilfsflüssigkeit zum Teilraum niederen Drucks.

Vorteilhafterweise ist zwischen den Teilräumen für die Hilfsflüssigkeit eine Leitung mit ventilartiger Überströmeinrichtung vorgesehen.

Ist erfindungsgemäß das Volumen zumindest des Raumes für die Hilfsflüssigkeit veränderbar ausgebildet, so kann insbesondere der Teilraum für den niedrigen Druckbereich der Hilfsflüssigkeit in seinem Volumen veränderbar gestaltet sein. Durch die Veränderlichkeit des Volumens des Raumes für die Hilfsflüssigkeit werden Änderungen der Dichte und damit des Volumens des Hilfsfluids -- hervorgerufen durch Temperatur- oder auch Druckveränderungen -- kompensiert.

Indem das Volumen des der Hilfsflüssigkeit zugeordneten Raumes variabel gestaltet wird, kann erfindungsgemäß sichergestellt werden, dass auch die Druckdifferenz zwischen dem Minimaldruck der Hilfsflüssigkeit und dem Druck des Fluids mit dem niedrigeren Druck nahezu Null ist. Dies mag z.B. durch eine flexible Membrane zwischen einer Seite des Raumes für die Hilfsflüssigkeit und dem Fluid mit entsprechendem Druck realisiert werden, oder -- besonders vorteilhaft -- durch bewegliche Anordnung zumindest einer magnetofluidischen Dichtung. Bei Anordnung mit Umgebungsluft unter Normaldruck (1 bar) auf der Niederdruckseite ist es am vorteilhaftesten, den Raum auf dieser Seite im Volumen variabel zu gestalten.

Die dargestellten Mittel führen dazu, dass die magnetofluidischen Dichtungen auch bei hohen Druckdifferenzen des ersten und des zweiten Fluids nur mit geringen Differenzdrücken belastet werden und somit ihre hermetische Dichtungsfunktion sichergestellt ist. Die Kraftübertragung erfolgt mechanisch über das kraftübertragende Element -- beispielsweise eine Welle --, so dass hohe Übertragungsleistungen möglich sind.

Die magnetofluidische Dichtung zur Hochdruckseite besteht bevorzugt aus drei Dichtelementen -- dargestellt durch drei in Achsrichtung magnetisierte Permanentmagnete mit zugeordneten ferromagnetischen Polschuhen, die jeweils ein konzentriertes magnetisches Feld erzeugen, das ein Ferrofluid als Dichtmittel fixiert. Diese sind in einem nichtmagnetischen Trägerring vorgesehen. Der Trägerring ist erfindungsgemäß über einen -- bevorzugt metallischen -- Faltenbalg am Gehäuse fixiert. Letzterer soll dem Träger- oder Verschlussring anliegen sowie anderseits dem Druck tragenden Element. Eine gute Montierbarkeit der Vorrichtung wird durch Befestigung des Faltenbalges an einer Buchse realisiert, die mit einem O-Ring gegen die Gehäusebuchse abgedichtet ist und durch einen Gewindering an der Gehäusebuchse fixiert wird.

Der Verschluss- oder Trägerring beinhaltet im Rahmen der Erfindung weiterhin eine -- vorteilhafterweise aus Siliziumkarbid geformte -- Dichtscheibe, die Teil eines mechanischen Dichtungssystems ist, das aus zwei gleichartigen SiC-Scheiben besteht. Eine der Scheiben weist in der Kontaktfläche entsprechend einem von außen nach innen wirkenden axialen Spiralrillenlager spiralförmig von außen zum Zentrum der Scheibe verlaufende Vertiefungen von einigen µm Tiefe auf; diese Vertiefungen gehen vorteilhafterweise vom Scheibenrand aus und enden in Abstand zu einem Zentraldurchbruch der ringartigen Dichtscheibe. Eine Aufgabe jenes Faltenbalges besteht darin, die der Gehäusebuchse zugeordnete Dichtscheibe bewegbar zu lagern und so deren Förderwirkung durch den Differenzdruck zu limitieren.

Erzeugen die Dichtscheiben im Betrieb einen höheren Druck als den abzudichtenden innerhalb der Pumpe, wird der Trägerring mit der zugeordneten Dichtscheibe in Richtung des abzudichtenden Druckes bewegt; der Abstand zwischen den Dichtscheiben wird größer und konsequenterweise lässt die Förderwirkung nach. Umgekehrt führt ein zu geringer durch die Dichtscheiben erzeugter Druck zur Verringerung des Spaltes zwischen den Dichtscheiben und damit zu einer Erhöhung der Förderwirkung.

Es liegt im Rahmen der Erfindung, dass die Mittel zur Erzielung der Dichtungswirkung dabei einer Wellenhülse und einer Gehäusebuchse zugeordnet werden. Wellenhülse und Gehäusebuchse sowie alle mit dem Förderfluid der Pumpe in Kontakt stehenden Teile bestehen aus nicht magnetischen Materialien, die ausreichend fest und gegen das Förderfluid chemisch beständig sind. Die Wellenhülse ist gegen die Welle und die Gehäusebuchse gegen das Gehäuse durch O-Ringe statisch abgedichtet. Die Gehäusebuchse kann mit Hilfe von Schrauben am Gehäuse befestigt werden. Die hermetische Dichtung ist dabei so ausgeführt, dass sie als Einheit montiert und demontiert werden kann.

Nach einem anderen Merkmal der Erfindung werden Wellenhülse und Gehäusebuchse zueinander durch Wälzlager -- etwa durch ein Doppelschrägkugellager -- konzentrisch drehbar in definiertem axialem Abstand gehalten. Bei Bedarf ist das Lager auch zur Aufnahme von auf die Welle wirkenden axialen Kräften geeignet. Dazu muss die Wellenhülse z.B. mit einem Sicherungsring oder einer Wellenmutter auf der Welle fixiert werden.

Als günstig hat es sich erwiesen, das Wälzlager in einem von Wellenhülse und Gehäusebuchse begrenzten Ringraum festzulegen. Dieses Wälzlager soll durch Sicherungsringe der Gehäusebuchse bzw. der Wellenbuchse und/oder durch einen flanschartigen radialen Außenring in jenem Ringraum fixiert werden.

Nach einem weiteren Merkmal der Erfindung liegt das Wälzlager einem Außenring der Wellenhülse an, dem anderseits eine der Dichtscheiben aus Siliziumkarbid zugeordnet ist. Vorteilhafterweise lagert eine der Dichtscheiben in einem sich von dem Außenring weg axial stufenweise erweiternden Abschnitt des Ringraums, dem der Verschlussring mit der anderen Dichtscheibe vorgeordnet ist.

Erfindungsgemäß verläuft zwischen der Außenfläche der Dichtscheibe und dem benachbarten Verschlussring ein Radialspalt, an den gegebenenfalls einerseits ein axialer Ringspalt zwischen der Welle und den Dichtelementen anschließt sowie anderseits ein weiterer axialer Ringspalt, der die benachbarte Dichtscheibe untergreift.

Der besseren Fixierung halber soll die Dichtscheibe zudem durch wenigstens einen achsparallelen Mitnehmerstift an die Mittelwand des Verschlussrings angeschlossen sein.

Von erfinderischer Bedeutung ist auch, dass an der Seite der Vorrichtung, die mit einer Flüssigkeit als Fluid beaufschlagt ist -- beispielsweise dem magnetofluidischen Dichtungselement am Träger- oder Verschlussring -- eine teilweise mit einem Gas, etwa Luft oder Inertgas, gefüllte Kammer vorgelagert sein kann, die zudem an der der Vorrichtung abgewandten Seite zur Welle mit einem Dichtspalt von etwa 0,1 mm abgedichtet ist; dessen Durchmesser wird größer gewählt als der Durchmesser des Dichtspaltes des magnetofluidischen Dichtungselements am Trägerring aber kleiner als der Durchmesser der äußeren Kammerwand.

Das Volumen der Kammer und die Breiten der Dichtspalte sind erfindungsgemäß so gestaltet, dass bei horizontaler Anordnung und Stillstand des Systems sowie bei Umgebungsdruck innerhalb der Kammer immer ein bestimmtes Gasvolumen im oberen Bereich der Kammer oberhalb des Dichtspaltes der Kammer residual vorhanden ist. Im Betrieb sammelt sich dieses Gasvolumen im Bereich des kleinsten Durchmessers der Welle -- in diesem Fall des Dichtspalts der magnetofluidischen Dichtung -- konzentrisch um die Welle und wird durch den Betriebsdruck auf ein kleineres Volumen zusammengedrückt. Auch wenn die beiden Volumina von gleicher Größe sind, soll durch geeignete Wahl der Breite des Dichtspaltes der Kammer dabei kein Gas aus dem letzteren entweichen. Andererseits soll das zweite Volumen groß genug sein, um den Dichtspalt der mangetofluiden Dichtung im Betrieb auch bei maximalem Druck vollkommen abzudecken. Ein günstiges Breiten- oder Durchmesserverhältnis zwischen dem Dichtspalt der magnetofluidischen Dichtung, dem Dichtspalt der Kammer und deren inneren Außendurchmesser liegt nach einem weiteren Merkmal der Erfindung bei 1 zu 1,2 zu 1,5.

Die Anordnung stellt sicher, dass die magnetofluidische Dichtung im Betrieb stets nur mit Gas in Kontakt kommt. Eine Durchmischung des Magnetofluids mit einer abzudichtenden Flüssigkeit wird somit wirksam verhindert.

Bei abzudichtenden Flüssigkeiten, bei denen keine chemische Reaktion mit Luft zu erwarten oder eine Reaktion unschädlich ist, kann das Residualvolumen an Luft innerhalb der Kammer bei Befüllung der Pumpe genutzt werden. Anderenfalls ist ein Hilfsanschluss an die Kammer erforderlich, um sie vor Inbetriebnahme der Pumpe mit einem Inertgas zu füllen.

Die Erfindung umfasst also mehrere einander zugeordnete Funktionskomplexe, nämlich zum einen die Räume mit den hermetischen Dichtungen und dem Hilfsfluid, zudem Mittel zum Erzeugen der Druckdifferenz, dann die Regelung der Druckdifferenz mit Hochdruck. Auch der Druckausgleich im Hilfsfluid -- die Druckdifferenz zum Niederdruck -- wird erfasst sowie die beschriebene Zusatzeinrichtung für die Gasbeaufschlagung.

Im Rahmen der Erfindung liegt auch ein Verfahren, bei dem -- insbesondere unter Verwendung der oben beschriebenen Vorrichtung -- zwischen dem kraftübertragenden Organ und dem druckisolierenden Element in -- durch jeweils ein Dichtungselement begrenzten Räumen -- Fluide unterschiedlichen Druckes und zwischen diesen in einem Raum eine Hilfsflüssigkeit bzw. ein Hilfsfluid gehalten werden; in letzterer werden zwei Druckbereiche hergestellt, zudem soll der Teilbereich für den höheren Druck jener Hilfsflüssigkeit dem Raum für das Fluid höheren Druckes zugeordnet werden. Der Raum für die Hilfsflüssigkeit soll beidseits zu den Räumen für die Fluide durch magnetofluidische Dichtungselemente thermisch abgedichtet werden.

Ein weiterer Verfahrensschritt sieht vor, dass der Raum für die Hilfsflüssigkeit vor deren Einführung mit einem Vakuum beaufschlagt wird; die Hilfsflüssigkeit vermag so sämtliche Hohlräume innerhalb der Vorrichtung aufzufüllen.

Zudem soll eine Rückströmung aus dem Teilraum höheren Drucks der Hilfsflüssigkeit zum Teilraum niederen Drucks geregelt werden.

Das erfindungsgemäße Verfahren umfasst auch, dass die Druckdifferenz innerhalb der Hilfsflüssigkeit durch Relativbewegung geometrischer Elemente erzeugt wird, die der Welle einerseits und dem druckisolierenden Element anderseits zugeordnet sind und eine Fördereinrichtung bilden.

Nach einem anderen Verfahrensmerkmal wird durch Dichtscheiben, die zwischen sich spiralartige Rillen bzw. Vertiefungen begrenzen, eine Förderwirkung für die Hilfsflüssigkeit aufgebaut. Die Förderwirkung der Dichtscheiben soll durch Vermehrung von deren Druck sowie des Abschnitts zueinander erhöht werden.

Ein anderes Merkmal des erfindungsgemäßen Verfahrens bietet an, dass in einer dem Dichtungselement vorgelagerten sowie ein Gas enthaltender Kammer das Gasvolumen im Betrieb im Bereich des Dichtspaltes zwischen Dichtungselement und Welle konzentrisch um diese gesammelt sowie durch den Betriebsdruck zusammengedrückt wird.

Als Vorzüge des erfindungsgemäßen Systems sind vor allem folgende Einzelheiten anzusehen:
- mit geringen Kosten realisierbar;
- keine Wirbelstromverluste;
- als Cartridge montierbar;
- einfacher Austausch möglich;
- geringer Platzbedarf;
- keine Gleitlager innerhalb der Pumpe erforderlich;
- Aufnahme des Axialschubes durch das integrierte Wälzlager möglich;
- Einsatz von kostengünstigen Ferritmagneten möglich;
- auch für Pumpen mit sehr hoher Leistung einsetzbar;
- mit geringem konstruktiven Aufwand in vorhandene Pumpen-Baureihen zu integrieren.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1:: einen Dichtungsbereich einer Pumpenwelle im Längsschnitt mit erfindungsgemäßer Dichtung vor dem Zusammenbau;
- Fig. 2:: den Dichtungsbereich gemäß Fig. 1 in montiertem Zustand;
- Fig. 3:: den gegenüber Fig. 2 etwas vergrößerten Dichtungsbereich ohne Pumpenwelle;
- Fig. 4:: einen vergrößerten Ausschnitt aus Fig. 2, 3;
- Fig. 5:: einen vergrößerten Ausschnitt aus Fig. 4 in anderer Ausgestaltung;
- Fig. 6:: eine Gehäusebuchse des Dichtungsbereichs im Längsschnitt;
- Fig. 7:: eine Wellenhülse des Dichtungsbereichs im Längsschnitt;
- Fig. 8 bis Fig. 10:: diametrale Schnitte durch unterschiedliche, die Wellenbuchse umfangende Organe des Dichtungsbereichs;
- Fig. 11:: ein vergrößertes Detail der Fig. 10;
- Fig. 12:: Draufsicht auf eine für den Dichtungsbereich bestimmte ringartige Dichtscheibe;
- Fig. 13, 14:: zwei Diametralschnitte durch ein Paar von Dichtscheiben nach Linie D in Fig. 12;
- Fig. 15:: einen schematischen Querschnitt durch einen Abschnitt der Vorrichtung;
- Fig. 16:: eine Schemaskizze zu einer magnetofluidischen Dichtung;
- Fig. 17:: eine schematische Zuordnung von Querschnitten mit einer Zusatzeinrichtung zu unterschiedlichen Verfahrensständen;
- Fig. 18 bis Fig. 20:: drei unterschiedliche Dichtungssituationen an der in Seitenansicht wiedergegebenen Pumpenwelle.

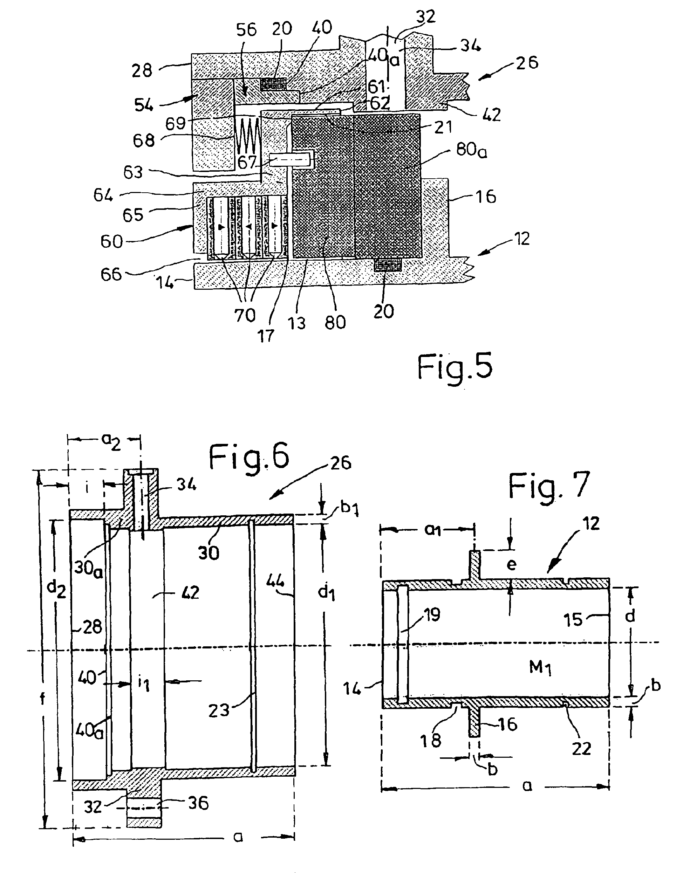

Ein Dichtungsbereich Q der Pumpenwelle 10 einer nicht weiter wiedergegebenen Kreiselpumpe weist eine mit ihrer Längsachse M₁ zur Längsachse M der Pumpenwelle 10 koaxiale Wellenhülse 12 der Länge a von 60 mm sowie eines Innendurchmessers d von hier 30 mm auf; die Wanddicke b der Wellenhülse 12 misst 5 mm. In einem mittleren Abstand a₁ von etwa 25 mm zur Stirnkante 14 der Wellenhülse 12 ragt gemäß Fig. 7 von dieser ein angeformter Außenring 16identischer Wanddicke b -- der Kraglänge e von etwa 7 mm ab. Nahe des Außenringes 16 ist eine Außennut 18 für einen O-Ring 20 zu erkennen; ein weiterer O-Ring 20 lagert in einer der Stirnkante 14 nahen Innennut 19. Nahe der dargestellten Heckkante 15 der Wellenhülse 12 findet sich eine zweite Außennut 22 als Einstich für einen weiter unten beschriebenen Sicherungsring.

Die Wellenhülse 12 wird von einer koaxialen Gehäusebuchse 26 jener Länge a umfangen, deren Innendurchmesser d₁ hier 68 mm beträgt bei einer Wanddicke b₁ von ebenfalls 5 mm.

Die Wellenhülse 12 ist gegen die Pumpenwelle 10 und die Gehäusebuchse 26 gegen das Pumpengehäuse durch die O-Ringe 20 statisch abgedichtet. Im übrigen kann die Gehäusebuchse 26 durch Schrauben am Gehäuse befestigt werden.

In mittlerem Abstand a₂ von hier etwa 20 mm zur Stirnkante 28 der Gehäusebuchse 26 ragt von deren Wandung 30 ein angeformter Flanschring 32 des Durchmessers f von 100 mm sowie der Breite g von 10 mm ab, der zum einen -- beispielsweise zwei -- radiale Gewindebohrungen 34 für Verschlussschrauben 35 enthält sowie etwa vier achsparallele Durchbrüche 36 für Anschlussschrauben 38.

In axialem Abstand i (etwa 10 mm) von jener Stirnkante 28 ist die Wandung 30 der Gehäusebuchse 36 ein- bzw. achswärts zweifach gestuft. Diese beiden Stufen 40, 40ₐ jeweils geringer Radialhöhe sind erforderlich, da der Innendurchmesser d₂ der Stirnkante 28 mit 73 mm größer ist als der anderseitige Durchmesser d₁ von 68 mm; die Stirnkante 28 wird von einem Wandabschnitt 30a angeboten, der an jenem Flanschring 32 ansetzt. Im Bereich dieses Flanschringes 32 ist im übrigen ein innerer Formring 42 -- geringer radialer Höhe -- der Breite i₂ von 10 mm aus der Wandung 30 herausgeformt (s. Fig. 6).

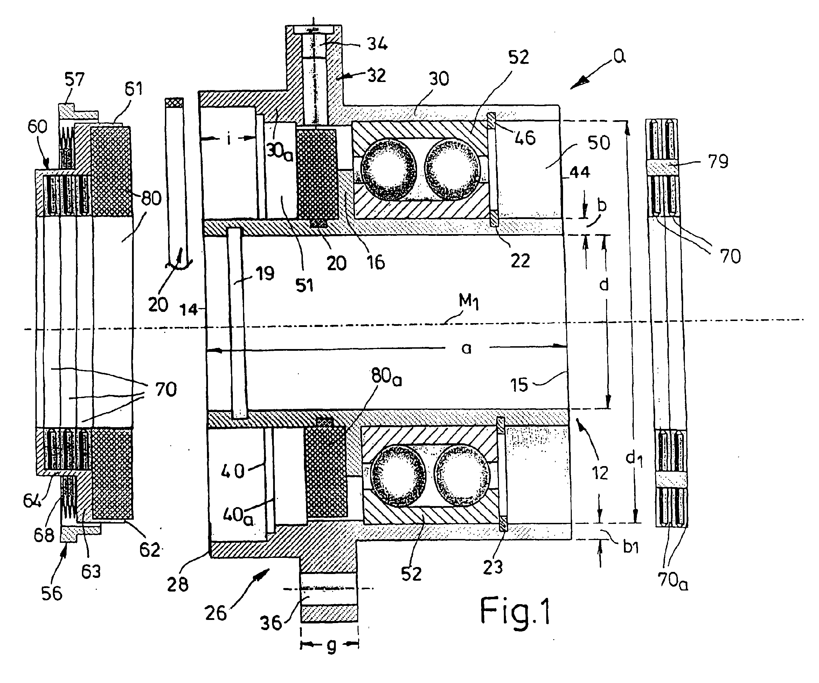

Nahe der Heckkante 44 der Gehäusebuchse 26 verläuft eine Innennut 23, die der oben erwähnten Außennut 22 der Wellenhülse 12 gegenüberliegt und mit ihr gemeinsam ein Paar von Sicherungsringen 46, 46ᵢ hält, das in dem von Wellenhülse 12 und Gehäusebuchse 26 gebildeten Zylinderringraum 50 verläuft; letzterer geht am Formring 42 gemäß Fig. 1 in einen gestuften Abschnitt 51 des Zwischenraumes von Wellenhülse 12 und Gehäusebuchse 26 über.

Zwischen den Sicherungsringen 46, 46ᵢ und dem Außenring 16 der Wellenhülse 12 sitzt im Zylinderringraum 50 ein Wälzlager 52, beispielsweise ein Doppelschrägkugellager, das Wellenhülse 12 und Gehäusebuchse 26 konzentrisch drehbar in definiertem radialen und axialen Abstand hält. Dazu muss die Wellenhülse 12 -- beispielsweise mit dem inneren Sicherungsring 46ᵢ oder einer Wellenmutter -- auf der Welle 10 fixiert werden.

Vor allem die Fig. 1, 4, 5 verdeutlichen, dass die oben erwähnten Stufen 40, 40ₐ als Anschlag für einen -- querschnittlich L-förmigen -- Haltering 56 und einen von diesem gehaltenen O-Ring 20 dienen; diese werden gemäß Fig. 1 axial in den gestuften Abschnitt 51 eingeschoben. Dervon einem von der Stirnkante 28 umgebenen Frontring 54an die Stufe 40ₐ gepresste Haltering 56 eines Innendurchmessers n von 64 mm, eines Außendurchmessers n₁ von 74 mm sowie der Breite k von 7 mm steht der anderen Stufe 40 mit einem angeformten Außenring 57 der Höhe n₃ von etwa 5 mm in Abstand gegenüber.

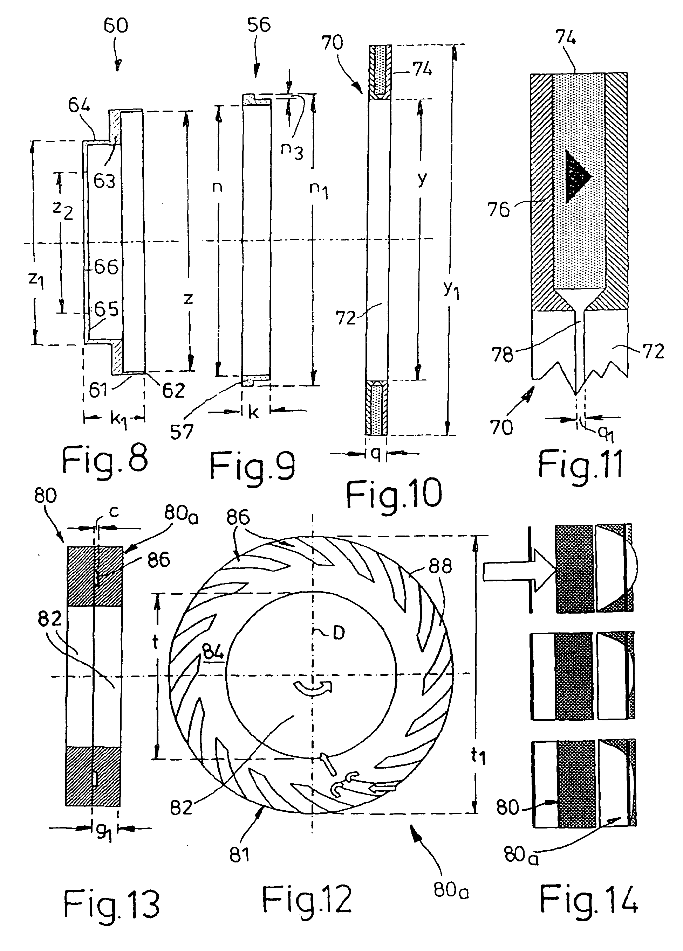

Innerhalb des Frontringes 54 sowie des Halteringes 56 ist ein radial zweistufiger Träger- oder Verschlussring 60 axialer Breite k₁ von 15 mm angebracht, den Fig. 8 deutlich werden lässt mit einer achsparallelen Außenwand 61 des Innendurchmessers z von 65 mm. Etwa mittig zwischen der Außenkante 62 dieser Außenwand 61 sowie einer radialen ringartigen Frontwand 65 des Verschlussringes 60 ist letzterer durch eine -- ebenfalls ringförmige -- radiale Mittelwand 63 gestuft; an diese ist ein achsparalleler Wandring 64 des Außendurchmessers z₁ von 51 mm angeformt und an letzteren jene Frontwand 65. Der Durchmesser z₂ der zentrischen Öffnung 66 der Frontwand 65 misst 35 mm. Der Querschnitt des Halteringes 56 besteht also aus zwei Winkelabschnitten, deren äußerer die Außenwand 61 und die Mittelwand 63 enthält; an letztere schließt der Wandring 64 des inneren Winkelabschnitts an, der auch die Frontwand 65 umfasst und an der zentrischen Öffnung 66 endet.

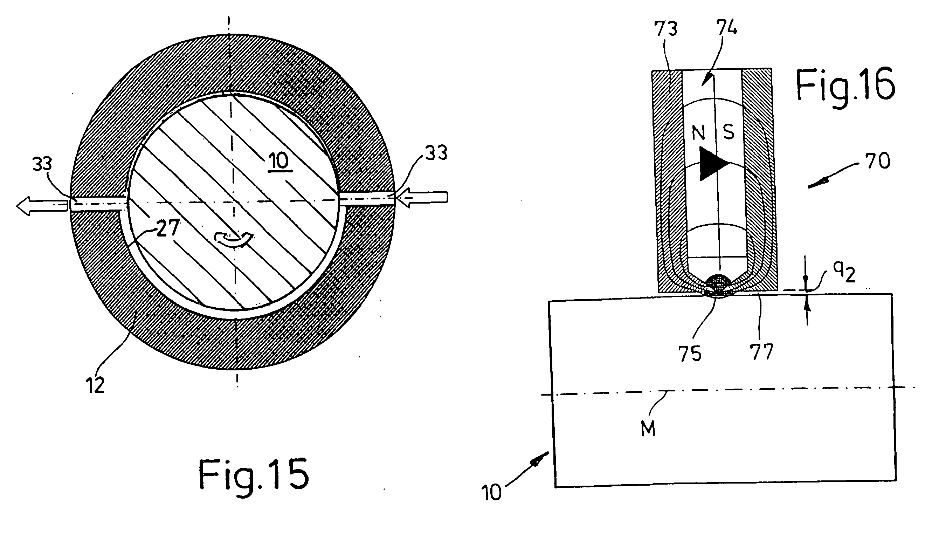

Zwischen der Mittelwand 63 des nichtmagnetischen Träger- oder Verschlussringes 60 sowie dem erwähnten Frontring 54 ist ein ringförmiger -- bevorzugt metallischer -- Faltenbalg 68 zu erkennen, der an den Außenring 57 angeschlossen ist sowie innenseitig an die Mittelwand 63 des Trägerringes 60. Letzterer ist in der Gehäusebuchse 26 festlegt. Innerhalb des Wandringes 64 bzw. des Trägerringes 60 sind drei jeweils ringförmige Magnetdichtungen 70 angeordnet, deren Aufbau insbesondere Fig. 10, 11 entnommen zu werden vermag. Ihre Breite q misst etwa 3 mm, der Innendurchmesser y des Ringdurchbruches 72 etwa 35 mm und der Außendurchmesser y₁ hier 50 mm. Mit 74 ist ein Permanentmagnet für ein Ferrofluid bezeichnet, der gemäß Fig. 16 zwei Polschuhe N, S enthält, beispielsweise gemäß Fig. 11 bei 76 einen querschnittlich U-förmigen Ring -- aus zumindest zwei Teilenals Eisenrückschluss mit sich zum Ringdurchbruch 72 öffnendem Spalt 78 der Breite q₁ von etwa 0,1 mm.

Die drei Dichtelemente 70 bilden eine magnetofluidische Dichtung zur Hochdruckseite und sind drei in Achsrichtung magnetisierte Permanentmagnete mit zugeordneten ferromagnetischen Polschuhen N, S, die jeweils ein konzentriertes magnetisches Feld erzeugen, das ein Ferrofluid als Dichtmittel fixiert. Der Faltenbalg 68 liegt zur besseren Montierbarkeit der Vorrichtung am Frontring 54 an und ist mit dem Haltering 56 durch einen O-Ring 20 gegen die Gehäusebuchse 26 abgedichtet, der durch den -- mit Außengewinde versehenen -- Frontring 54 an der Gehäusebuchse 26 fixiert wird.

Zwei weitere Magnetdichtungen 70 der beschriebenen Art sind an der heckwärtigen Seite der Sicherungsringe 46 angeordnet. Diese Magnetdichtungen 70 werden von zwei entsprechenden Magnetdichtungen 70ₐ anderer Durchmesserdimensionierung umfangen unter Zwischenschaltung eines Distanzringes 79.

Jener Verschluss- oder Trägerring 60 enthält weiterhin eine in Fig. 12, 13 skizzierte Scheibe 80 aus Siliziumkarbid, die Teil eines mechanischen Dichtungssystems aus zwei gleichartigen SiC-Scheiben 80, 80ₐ der Breite g₁ von etwa 7 mm mit Zentraldurchbruch 82 des Durchmessers t von etwa 39 mm ist. Der Außendurchmesser t₁ der Scheibe 80, 80ₐ sei mit etwa 65 mm angenommen. In der in Fig. 1 bis 5, 13 rechten Scheibe 80ₐ sind an der Front- oder Kontaktfläche 84entsprechend einem von außen nach innen wirkenden axialen Spiralrillenlager -- hier sechzehn vom Scheibenrand 81 ausgehende, in Draufsicht teilkreisfömig gebogene Spiralrillen 86 einer Tiefe von 10 µm bis 20 µm eingeätzt oder eingeschliffen. Diese Spiralrillen 86 enden in radialem Abstand zur zentrischen Öffnung 66 und sind durch entsprechend gebogene Dammrippen 88 getrennt. Die Pumprichtung und die Spiralrillen 86 sind in Fig. 12 an der Scheibe 80ₐ von außen zur Mitte vorgegeben.

Die Spiralrillen oder -nuten 86 können sowohl in die stationäre als auch in die bewegte Scheibe 80, 80ₐ eingearbeitet sein. Wichtig ist, dass die bearbeitete Frontfläche 84 der anderen Scheibe 80, 80ₐ direkt gegenüberliegt, damit im Betrieb die Förderwirkung erzeugt wird.

Die Dichtelemente 70 und die Scheibe 80 im Trägerring 60 sind gegen letzteren abgedichtet, z.B. dicht eingeschrumpft. Die zweite Scheibe 80ₐ ist gegenüber der ersten auf der Wellenhülse 12 angeordnet. Fig. 5 macht einen Ringspalt 13 zwischen Scheibe 80 und Wellenhülse 12 deutlich. Im gewählten Ausführungsbeispiel wird die SiC-Scheibe 80ₐ durch den Außenring 16 als seitlichem Anschlag und einen O-Ring 20, der gleichzeitig eine Abdichtung gegen die Wellenhülse 12 und eine Drehmitnahme darstellt, festgelegt. Die Drehmitnahme kann -- falls erforderlich -- etwa durch einen Mitnehmerstift zwischen Anschlag 16 und SiC-Scheibe 80ₐ unterstützt werden. Die gegenüberliegenden Flächen der Scheiben 80, 80ₐ sind im Mikromterbereich plan bearbeitet und weisen eine entsprechend feine Oberflächenrautiefe auf. Der Balg 68 des Trägerringes 60 gewährleistet eine Beweglichkeit der Kontaktflächen der Scheiben 80, 80ₐ axial zueinander mit einem Abstand von Null bis einige Zehntel Millimeter. Im Stillstand werden die Scheiben 80, 80ₐ durch die abzudichtende Druckdifferenz gegeneinandergedrückt, und somit wird durch die Scheiben 80, 80ₐ die Hochdruckseite der Vorrichtung zur Niederdruckseite abgedichtet. Dichtelemente 70 und Dichtscheibe 80 an der Trägerscheibe 60 werden -- wie erwähnt -- zur Wellenhülse 12 durch den Ringspalt 13 in einem definierten konzentrischen Abstand von etwa 0,1 mm gehalten (Fig. 5).

Fig. 14, soll den Druckaufbau durch die Förderwirkung zwischen den beiden Scheiben 80, 80ₐ verdeutlichen. Der obere Ausschnitt zeigt den Druckaufbau, wenn die linke Scheibe 80 nur durch eine Kraft belastet ist und das Druckniveau auf der Scheiben-Außen- und -Innenseite gleich ist (Funktion als Spiralrillen-Axiallager). Die beiden Ausschnitte darunter zeigen mögliche Druckverläufe, wenn die Kraft durch einen Mediendruck auf die linke Scheibe 80 und entsprechend höherem Druckniveau auf der Scheibeninnenseite -- wie erfindungsgemäß der Fall -- erzeugt wird. Abhängig vom Druckverlauf kann eine zusätzliche Maßnahme zur Druckregulierung entsprechend Fig. 5 notwendig werden, die weiter unten erläutert wird.

Die magnetofluidische Dichtung zur Atmosphärenseite besteht aus den vier oben beschriebenen Dichtelementen 70, 70ₐ, die -- wie gesagt -- an den Sicherungsringen 46 so angeordnet sind, dass zwei Elemente 70 zur Wellenhülse 12 und zwei Elemente 70ₐ zur Gehäusebuchse 26 gerichtet sind. Das Magnetofluid hat in diesem Fall nicht nur eine dichtende, sondern auch eine zentrierende Wirkung, so dass die Scheibe 80 mit den Dichtungselementen axial frei beweglich ist zwischen -- in diesem Bereich zueinander konzentrisch zylindrisch liegender -- Wellenhülse 12 und Gehäusebuchse 26. Dadurch ist das Volumen im Bereich zwischen den magnetofluiden Dichtungen -- wie gefordert -- auf der Niederdruckseite variabel und somit eine gegen Null gehende Druckdifferenz zwischen der Niederdruckseite des Hilfsfluids sowie der Umgebung gewährleistet.

Fig. 15 lässt erkennen, wie der Raum zwischen den magnetofluidischen Dichtelementen 70 vorteilhafterweise mit Hilfe von zwei Anschlüssen 33 -- oder der beiden Gewindebohrungen 35 -- mit einer Hilfsflüssigkeit befüllt wird. Während ein Anschluss 33 zum Auffüllen mit der Hilfsflüssigkeit genutzt wird, dient der andere dazu, die Vorrichtung vorher mit einem Vakuum zu beaufschlagen, so dass die Hilfsflüssigkeit sämtliche Hohlräume innerhalb der Vorrichtung Q auffüllt. Durch geeignete Anordnung der Anschlüsse 33 an den gegenüberliegenden Seiten des Ringraumes 27 in der Gehäusebuchse 26, der die der Wellenhülse 12 zugeordnete Dichtscheibe 80ₐ umschließt, lässt sich ein Differenzdruck zwischen den Anschlüssen 33 erzeugen, der zur Durchströmung der Vorrichtung mit Hilfsflüssigkeit aus einem externen Behälter während des Betriebes -- z.B. zur Kühlung -- genutzt werden kann. Dies wird etwa dadurch erreicht, dass der Ringraum 27 zwei unterschiedliche Seiten aufweist und eine der Seiten des Ringraumes 27 zur Scheibe 80 hin einen sehr geringen radialen Abstand von hier 0,1 mm und die andere Seite einen größeren Abstand von etwa 1 mm bildet.

Im Betrieb entfalten die SiC-Dichtscheiben 80, 80ₐ mit den Spiralrillen 86 gegeneinander eine Förderwirkung auf die Hilfsflüssigkeit, die zwischen Niederdruckseite und Hochdruckseite der Vorrichtung Q einen der Förderwirkung entsprechenden Differenzdruck aufbaut. Die Hilfsflüssigkeit wird so gewählt, dass einerseits eine gute Schmierung des Wälzlagers 52 gewährleistet ist und ein möglichst hoher Differenzdruck über den Dichtscheiben 80, 80ₐ entstehen kann (vorteilhaft: hohe Viskosität) und anderseits die Erwärmung der Hilfsflüssigkeit in beherrschbaren Grenzen bleibt (max. etwa 80°C, vorteilhaft: geringe Viskosität). Die Hilfsflüssigkeit wird darüber hinaus so gewählt, dass es mit dem Magnetofluid der Dichtungen 70, 70ₐ verträglich ist - günstigenfalls kann auf das Trägeröl des Magnetofluids (z.B. ein Silikonöl) zurückgegriffen werden.

Um ein "Durchschlagen" der magnetofluiden Dichtung auf der Hockdruckseite durch Überdruck -- drei Ringe ertragen einen Differenzdruck von max. etwa 0,5 bar -- zu verhindern, muss die Förderwirkung der Dichtscheiben 80, 80ₐ durch den an der hochdruckseitigen Dichtung anliegenden Differenzdruck limitiert werden. Dies wird durch die vorher bereits erwähnte Beweglichkeit der der Gehäusebuchse 26 zugeordneten Dichtscheibe 80 durch den Faltenbalg 68 erzielt. Erzeugen die Dichtscheiben 80, 80ₐ im Betrieb einen höheren Druck als den abzudichtenden innerhalb der Pumpe, wird die Trägerscheibe 60 mit der zugeordneten Dichtscheibe 80 in Richtung des abzudichtenden Druckes bewegt: der Abstand zwischen den Dichtscheiben 80, 80ₐ wird größer und konsequenterweise lässt die Förderwirkung nach. Umgekehrt führt ein zu geringer -- durch die Dichtscheiben 80, 80ₐ -- erzeugter Druck zur Verringerung des Spaltes zwischen den Dichtscheiben 80, 80ₐ und damit zur Erhöhung der Förderwirkung.

In Fällen, in denen die oben dargestellte Selbstregelungswirkung zwischen den Dichtscheiben 80, 80ₐ nicht ausreicht, ist die Unterstützung der Regelung mit Hilfe einer Überströmfunktion zwischen Hochdruck und Niederdruckbereich der Hilfsflüssigkeit realisierbar. Dabei wird die Dichtscheibe 80 auf der Hochdruckseite innerhalb des Trägerringes 60 axial verschiebbar und mit radialer Luft -- Radialspalt 17 zwischen Trägerring 60 und Dichtscheibe 80 von 0, 1 mm in Fig. 5 -- nach außen angeordnet. Zur radialen Fixierung und zur Drehmitnahme am Trägerring 60 dienen gemäß Fig. 5 mindestens zwei Mitnehmerstifte 67. Am äußeren Ende der Dichtscheibe 80 begrenzt eine radiale Anlagefläche 69 einen Dichtspalt. Die Anordnung der Anlagefläche 69 ist so gewählt, dass die Dichtscheibe 80 vom Trägerring 60 abhebt und somit der Dichtspalt öffnet, wenn der Druck zwischen Dichtscheibe 80 und Trägerring 60 höher ist als der Druck des abzudichtenden Fluids auf der Hochdruckseite. Von der Anlagefläche 69 geht ein achsparallel verlaufender Ringspalt 21 aus, der einerseits von der Außenwand 61 des Trägerringes 60 begrenzt ist sowie anderseits vom Umfang der -- der Gehäusebuchse 26 zugeordneten -- Dichtscheibe 80.

Insbesondere bei Anwendungen, bei denen keine chemisch aggressiven Medien abzudichten sind, bestehen verschiedene Möglichkeiten zur Kostenreduktion der Konstruktion. So können die Funktionen der Wellenhülse 12 und der Gehäusebuchse 26 von Welle 10 und Gehäuse übernommen werden. Die magnetofluidischen Dichtungen lassen sich kostengünstiger realisieren, wenn die Welle 10 aus ferromagnetischem Material gestaltet wird, so dass die magnetischen Feldlinien durch die Welle 10 geführt werden. Dadurch sind Anordnungen möglich, bei denen das magnetische Feld eines einzigen Permanentmagneten über mehrere Dichtspalte geführt wird. Die auf der Niederdruckseite notwendige Zentrierwirkung ist dann aber nicht mehr gegeben. Es liegt im Gegenteil eine Instabilität vor, so dass die Anpassung des Volumens des Raumes für die Hilfsflüssigkeit auf andere Weise als beschrieben realisiert werden muss. Die genannten Dichtscheiben 80, 80ₐ aus SiC können für einfache Anwendungen aus kostengünstigeren Materialien hergestellt und in andere Bauteile integriert werden.

Beim dargestellten Prinzip zur Erzeugung einer Druckdifferenz mit Hilfe von Dichtscheiben 80, 80ₐ mit Spiralnuten 86 handelt es sich lediglich um eine Ausführungsmöglichkeit. Andere Prinzipien -- wie z.B. Fördergewinde -- sind denkbar und möglich.

Der prinzipielle Aufbau einer magnetofluidischen Dichtung ist Fig. 16 zu entnehmen. Das Magnetfeld eines ringförmigen Permanentmagneten 74 mit axialer Magnetisierung wird durch zwei Polschuhe 73 auf einen Ringspalt 77 um die Welle 10 konzentriert. Das konzentrierte Feld hält ein Magnetofluid 75 stationär in jenem Ringspalt 77 fest, das somit eine Dichtwirkung zwischen den beiden Seiten des Aufbaus hervorruft.

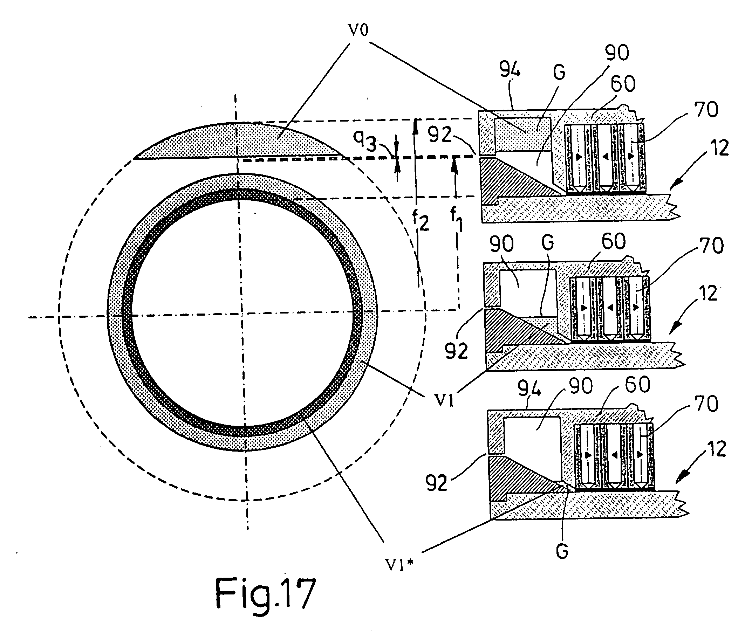

Um ein Durchmischen zwischen abzudichtender Flüssigkeit und Magnetofluid der Dichtung 70 zu verhindern, wird die oben beschriebene Vorrichtung gemäß Fig. 17 wie folgt ergänzt.

Am Trägerring 60 wird ein Bereich, ein Raum oder eine Kammer 90 der magnetofluidischen Dichtung 70 vorgelagert angeordnet, der/die teilweise mit einem Gas G -- beispielsweise Luft oder einem Inertgas -- gefüllt ist. Die Kammer 90 wird auf der der Vorrichtung abgewandten Seite zur Welle 10 mit einem Ring- oder Dichtspalt 92 der Weite q₃ von etwa 0,1 mm abgedichtet, dessen Durchmesser f₁ größer ist als der Durchmesser des Dichtspaltes 78 der magnetofluidischen Dichtung 70 am Trägerring 60 aber kleiner als der Durchmesser f₂ der äußeren Kammerwand 94.

Das Volumen der Kammer 90 und die Durchmesser der Dichtspalte sind so gestaltet, dass bei horizontaler Anordnung und Stillstand des Systems sowie bei Umgebungsdruck innerhalb der Kammer 90 immer ein bestimmtes Gasvolumen V0 im oberen Bereich der Kammer 90 -- oberhalb von deren Dichtspalt 92 -- residual vorhanden ist. Im Betrieb sammelt sich dieses Gasvolumen im Bereich des kleinsten Durchmessers des Rotors -- dies ist im vorliegenden Fall der Dichtspalt 77 der magnetofluidischen Dichtung 70 -- konzentrisch um die Welle 10 und wird durch den Betriebsdruck auf ein Volumen V1 zusammengedrückt. Auch wenn V1 gleich V0 ist, soll durch geeignete Wahl des Durchmessers f₁ des Dichtspaltes 92 der Kammer 90 dabei kein Gas aus diesem Dichtspalt 92 entweichen. Andererseits soll V1 groß genug sein, um den Dichtspalt 77 der magnetofluiden Dichtung 70 im Betrieb auch bei maximalen Druck komplett abzudecken. Ein günstiges Durchmesserverhältnis zwischen dem Dichtspalt 77 der magnetofluidischen Dichtung 70, dem Dichtspalt 92 der Kammer 90 und dem inneren Außendurchmesser der Kammer ist 1 zu 1,2 zu 1,5. Mit V1* ist in Fig. 17 das Gasvolumen bei Maximaldruck bezeichnet.

Die Anordnung stellt -- wie schon erwähnt -- sicher, dass die magnetofluidische Dichtung im Betrieb stets nur mit Gas in Kontakt kommt. Eine Durchmischung des Magnetofluids mit einer abzudichtenden Flüssigkeit wird somit wirksam verhindert.

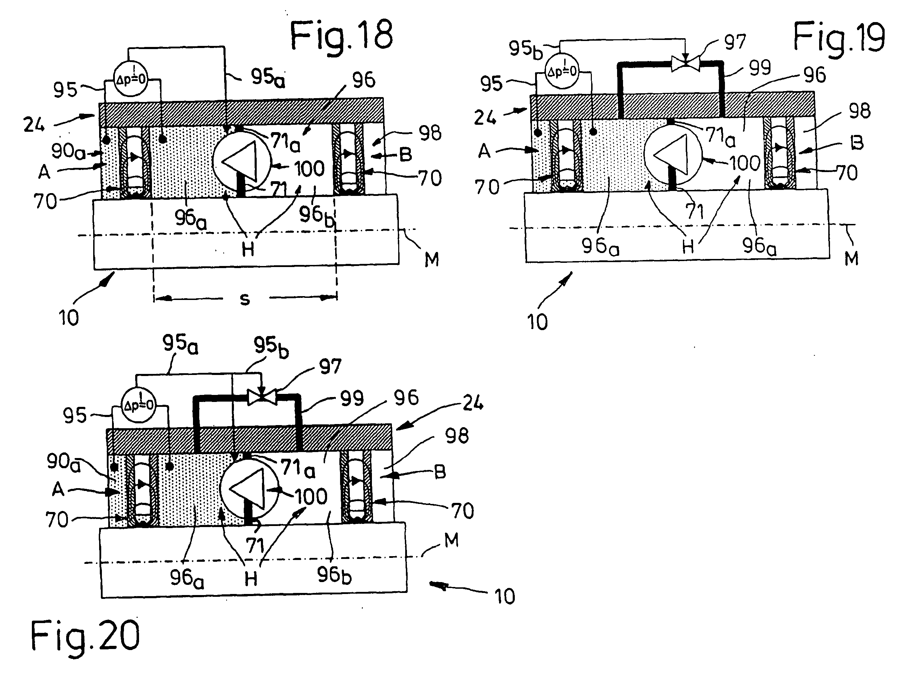

Die Fig. 18 bis 20 zeigen in abstrahierter Darstellung ein Prinzip der Erfindung zu zwei -- in axialem Abstand s zueinander verlaufenden -- magnetofluidischen Dichtungen 70, die an einer Welle 10 und einer zu dieser parallelen Gehäusewand 24 als druckisolierendem Element so angeordnet sind, dass drei Bereiche oder Räume entstehen: ein Raum 90ₐ mit einem abzudichtenden Fluid A bestimmten Druckes (z. B. Fördermedium mit 25 bar), ein Raum 96 mit einer Hilfsflüssigkeit H zwischen den Dichtungen 70 sowie ein Raum 98 mit einem Fluid B mit einem Differenzdruck zu Fluid A (z.B. Umgebungsluft mit 1 bar absolut). Der mittlere Raum 96 ist in zwei Hälften oder Abschnitte 96ₐ, 96_{b} geteilt durch eine Fördereinrichtung 100, die als Pumpensymbol in Form eines Kreises samt innenliegendem Dreieck skizziert ist für die Mittel, die eine Förderwirkung und damit einen Differenzdruck erzeugen. Die Verbindung 71 des Kreises mit der Gehäuseseite und die Verbindung 71ₐ des Dreiecks mit der Wellenseite symbolisiert die Zuordnung der Bauteile der Fördereinrichtung zu bewegten und stationären Teilen der Vorrichtung.

Die punktiert hervorgehobenen Räume 90ₐ, 96ₐ verdeutlichen Bereiche hohen Druckes; der Differenzdruck zwischen besagten Räumen wird mit geeigneten Mitteln -- symbolisiert durch die "Messleitung" 95 und dem Symbol "deltaP = 0!"aufgenommen und ein Signal -- symbolisiert durch die Pfeillinie 95ₐ -- zur Regulierung der Fördereinrichtung 100 in Abhängigkeit vom Differenzdruck erzeugt. In den punktfreien Räumen 96_{b}, 98 herrscht niedriger Druck.

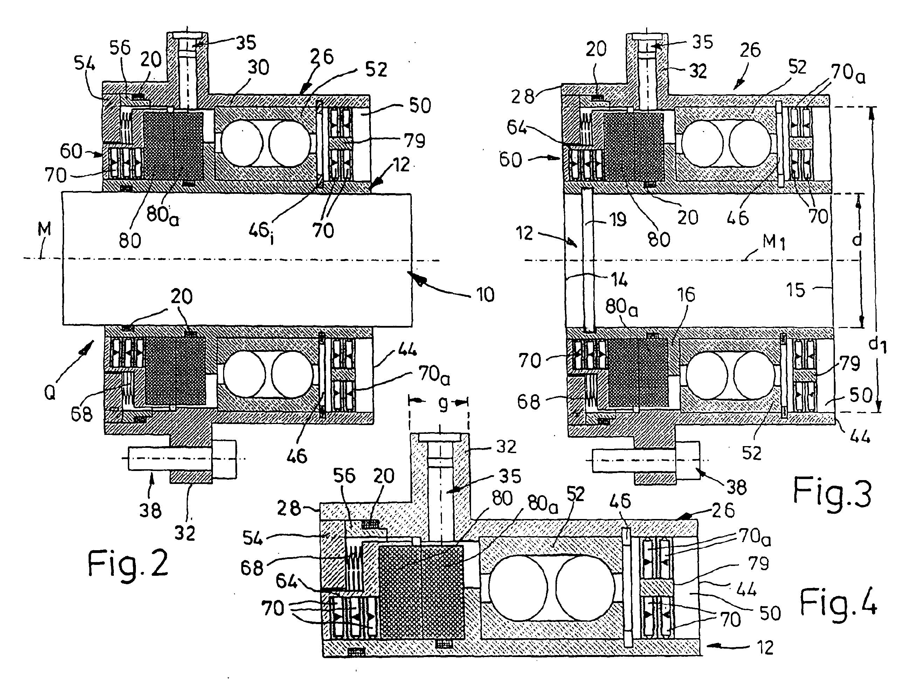

In Fig. 18 geschieht die Druckregulierung allein durch Regelung der Fördereinrichtung über den Differenzdruck (bevorzugte Lösung). Ergänzend sei dazu auf Fig. 4 Bezug genommen. Fig. 19 zeigt die Druckregelung mit Hilfe eineran jene Messleitung 95 mit einer Pfeillinie 95_{b} angeschlossenen sowie durch ein Überströmventil symbolisierten -- Überströmeinrichtung 97, die vom Differenzdruck angesteuert wird und sich in einer die Räume 96b und 98 verbindenden Leitung 99 befindet. Fig. 20 verdeutlicht die Kombination beider Regelvarianten entsprechend Fig. 5 der konkreten Ausführung.

Im Bereich 96 mit der Hilfsflüssigkeit H befinden sich also Mittel, die innerhalb dieses Bereiches 96 einen Differenzdruck erzeugen, wobei der höhere Druck auf der Seite zum Fluid A mit dem höheren Druck hin und umgekehrt erzeugt wird. Die erzeugbare Druckdifferenz muss mindestens dem maximal auftretenden Differenzdruck von Fluid A und Fluid B entsprechen. Zudem sind Mittel vorhanden, die auf den Differenzdruck zwischen dem Fluid A mit höherem Druck und dem Maximaldruck der Hilfsflüssigkeit H reagieren. Die Reaktion wird dazu genutzt, um durch geeignete Mittel die genannte Druckdifferenz auf einen Wert nahe Null zu regeln. Dies kann z.B. durch Regelung der Leistung der Druckdifferenz erzeugenden Mittel geschehen oder durch Regelung einer Rückströmung aus dem Raum 90ₐ hohen Druckes der Hilfsflüssigkeit H zum Raum 96_{b} niedrigen Druckes.

Indem das Volumen des der Hilfsflüssigkeit H zugeordneten Raumes 96 variabel gestaltet wird, kann sichergestellt werden, dass auch die Druckdifferenz zwischen dem Minimaldruck der Hilfsflüssigkeit H und dem Druck des Fluids B mit dem niedrigeren Druck nahezu Null ist. Dies kann zum Beispiel durch eine flexible Membrane zwischen einer Seite des Raumes für die Hilfsflüssigkeit H und dem Fluid mit entsprechendem Druck realisiert werden oder durch bewegliche Anordnung einer der magnetofluidischen Dichtungen 70. Bei Anordnung mit Umgebungsluft unter Normaldruck (1 bar) auf der Niederdruckseite ist es am vorteilhaftesten, den Raum 96 auf dieser Seite im Volumen variabel zu gestalten.

Die dargestellten Mittel stellen sicher, dass die magnetofluidischen Dichtungen 70 auch bei hohen Druckdifferenzen der Fluide A, B nur mit geringen Differenzdrücken belastet werden - und somit ihre hermetische Dichtungsfunktion sichergestellt ist. Die Kraftübertragung erfolgt mechanisch über das kraftübertragende Element, z.B. die Welle 10, so dass hohe Übertragungsleistungen möglich sind.

Die Druckdifferenz innerhalb der Hilfsflüssigkeit H wird beispielsweise durch Relativbewegung von geometrischen Elementen erzeugt, die der Welle 10 und dem Gehäuse statisch zugeordnet sind und eine Fördereinrichtung für die Hilfsflüssigkeit H bilden. Dabei wird durch geeignete Maßnahmen -- z.B. durch jenes Rückschlagventil -- sichergestellt, dass bei Stillstand des Systems kein Druckausgleich zwischen Hoch- und Niederdruckbereich 96ₐ bzw. 96_{b} der Hilfsflüssigkeit H stattfindet.

## Patentansprüche

1. Vorrichtung zum Führen zumindest zweier Strömungsmittel unterschiedlichen Druckes mit einer Welle od.dgl. kraftübertragendem Organ sowie einem druckisolierenden Element wie einem die Welle od.dgl. umgebenden Gehäuse, zwischen der Welle (10) od.dgl. kraftübertragendem Organ und dem druckisolierenden Element durch Dichtungselemente (70, 70ₐ) bestimmte, in Achsrichtung nebeneinander liegende Räume (90, 90ₐ; 96; 98), wobei zumindest eines der Dichtungselemente (70, 70ₐ) leckagefrei ausgebildet ist sowie zwei Räume (90, 90ₐ; 98) für Fluide (A, B) unterschiedlichen Druckes einen Raum (96) für ein Hilfsfluid (H) flankieren, wobei der Raum (96) für das Hilfsfluid (H) durch eine Einrichtung (100) in zwei Teilräume (96ₐ, 96_{b}) für zwei unterschiedliche Druckbereiche unterteilt ist, sowie mit Mitteln zum Erzeugen einer Druckdifferenz zwischen den Teilräumen (96ₐ, 96_{b}), wobei die Mittel eine Fördereinrichtung (100) sind,
**dadurch gekennzeichnet, dass**
dass die Fördereinrichtung (100) innerhalb der Teilräume (96a, 96b) angeordnet ist und relativ zueinander bewegbare, dem druck-isolierenden Element und dem kraftübertragenden Organ (10) zugeordnete geometrische Teile aufweist.

2. Vorrichtung nach Anspruch 1, **dadurch gekennzeichnet dass** dem Raum (90ₐ) höheren Drucks ein Fördermedium sowie dem Raum (98) niederen Drucks Umgebungsluft zugeordnet ist.

3. Vorrichtung nach Anspruch 1 oder 2, **gekennzeichnet durch** ein magnetofluidisches Dichtungselement (70, 70ₐ) zum Begrenzen des Raumes (96) für das Hilfsfluid (H), wobei das Hilfsfluid (H) bevorzugt ein Trägeröl des dem Dichtungselement (70, 70ₐ) zugeordneten Magnetofluids ist, gegebenenfalls ein Silikonöl.

4. Vorrichtung nach Anspruch 1 oder 2, **dadurch gekennzeichnet, dass** der Raum (96) für das Hilfsfluid (H) zwei Anschlüsse (33) aufweist, von denen einer zum Erzeugern eines Vakuums sowie der andere als Durchgang für das Hilfsfluid (H) ausgebildet ist oder, dass der Teilraum (96ₐ) für den höheren Druck des Hilfsfluids (H) dem Raum (90a) für das Fluid (A) höheren Druckes zugeordnet ist, wobei gegebenenfalls membranartige Dichtungselemente zum Begrenzen des Raumes (96) für das Hilfsfluid (H) vorgesehen sind.

5. Vorrichtung nach einem der Ansprüche 1 bis 4, **gekennzeichnet durch** derart ausgebildete Mittel zum Erzeugen einer Druckdifferenz zwischen den Teilräumen (96a, 96b), dass die erzeugbare Druckdifferenz zumindest dem maximal auftretenden Differenzdruck zwischen den Fluiden (A, B) entspricht, wobei bevorzugt Mittel vorgesehen sind, mit welchen die Druckdifferenz zwischen dem maximalen Druck des Hilfsfluids (H) und dem Druck des Fluids mit dem höheren Druck gegen Null regelbar ist, bevorzugt Organe zum Regeln der Leistung der die Druckdifferenz erzeugenden Mittel.

6. Vorrichtung nach Anspruch 5, **gekennzeichnet durch** Organe (97, 99) zum Regeln einer Rückströmung aus dem Teilraum (96ₐ) höheren Drucks des Hilfsfluids (H) zum Teilraum (96_{b}) niederen Druks und/oder **durch** eine zwischen den Teilräumen (96_{a,} 96_{b}) für das Hilfsfluid (H) eine vorgesehene Leitung (99) mit ventilartiger Überströmeinrichtung (97).

7. Vorrichtung nach einem der Ansprüche 1 bis 6, **dadurch gekennzeichnet, dass** das Volumen zumindest des Raumes (96) für das Hilfsfluid (H) veränderbar ausgebildet ist und/oder zumindest der Teilraum (96_{b}) für den niedrigen Druckbereich des Hilfsfluids (H) in seinem Volumen veränderbar gestaltet ist.

8. Vorrichtung nach einem der Ansprüche 3 bis 7 **dadurch gekennzeichnet, dass** sich beidseits des Raumes (96) für das Hilsfluid (H) zwischen dem kraftübertragenden Organ (12) und dem druckisolierenden Element (24) ein magnetofluidisches Dichtelement (70, 70ₐ) erstreckt.

9. Vorrichtung nach einem der Ansprüche 1 bis 8, **dadurch gekennzeichnet, dass** das Dichtungselement (70, 70ₐ) wenigstens einen Permanentmagneten (74) in einem Ring (76) enthält sowie ein dem kraftübertragenden Organ bzw. der Welle (10) an einem Ringspalt (77) zugeordnetes Magnetofluid (75), wobei gegebenenfalls der Permanentmagnet (74) Teil einer das Dichtungselement bildenden Magnetdichtung (70) ist, welche mit dem Ring (76) die Welle (10) umfängt, wobei gegebenenfalls das Magnetfeld des ringförmigen Permanentmagneten (70) mittels zugeordneter Polschuhe (73) auf den Ringspalt (77) konzentriert ist.

10. Vorrichtung nach Anspruch 9, **gekennzeichnet durch** in Achsrichtung magnetisierte Permanentmagnete (70) an der Hochdruckseite in einem Träger- oder Verschlussring (60) aus nicht magnetischem Werkstoff oder **durch** zumindest zwei konzentrische Magnetdichtungen (70, 70ₐ), deren Querschnitte **durch** wenigstens einen achsparallelen Distanzring (79) getrennt sind, wobei gegebenenfalls dem Verschlussring (60) ein Faltenbalg (68) anliegt, der anderseits dem Druck tragenden Element anliegt und der Faltenbalg (68) bevorzugt aus metallischem Werkstoff besteht sowie an seiner radialen Außenseite bevorzugt von einem Haltering (56) umgeben ist, und/oder sich gegen einen an die Gehäusebuchse (26) festliegenden Frontring (54) abstützt.

11. Vorrichtung nach Anspruch 10, **dadurch gekennzeichnet, dass** der Verschlussring (60) zumindest eine Dichtscheibe (80) als Teil eines wenigstens zwei Dichtscheiben (80, 80ₐ) mit Zentraldurchbruch (82) umfassenden mechanischen Dichtungssystems enthält, wobei die Dichtscheibe (80, 80ₐ) gegebenenfalls aus Siliziumkarbid geformt ist, wobei die Dichtscheiben (80, 80ₐ) bevorzugt mit Kontaktflächen (84) aufeinander liegen und vorteilhafterweise zumindest eine Dichtscheibe (80ₐ) in der Kontaktfläche (84) vom Scheibenrand (81) zum Scheibenzentrum gekrümmt verlaufende spiralartige Rillen bzw. Vertiefungen (86) geringer Tiefe (c) aufweist, die in Abstand zum Zentraldurchbruch (82) enden und von der Kontaktfläche der anderen Dichtscheibe (80) übergriffen sind.

12. Vorrichtung nach einem der Ansprüche 1 bis 11, **dadurch gekennzeichnet, dass** wenigstens eine die Welle (10) umgebende Wellenhülse (12) und eine dazu koaxiale Gehäusebuchse (26) jeweils aus einem nicht magnetischen Werkstoff bestehen sowie zwischen diesen zumindest zwei der die Welle umfangenden magnetofluidischen Dichtungselemente (70, 70ₐ) vorgesehen sind, wobei die Wellenhülse (12) bevorzugt gegen die Welle (12) und die Gehäusebuchse (26) gegen das Gehäuse durch O-Ringe (20) statisch abgedichtet ist, und/oder die Welle (10) aus ferromagnetischem Werkstoff besteht.

13. Vorrichtung nach Anspruch 12, **dadurch gekennzeichnet, dass** das Kraft übertragende Organ bzw. die Welle (12) oder die Wellenhülse (12) und dass Druck isolierende Elemente bzw. das Gehäuse oder die Gehäusebuchse (26) durch radial zur Längsachse (M₁) der Wellenhülse angeordnete Wälzlager (52) konzentrisch drehbar in definiertem axialem Abstand gehalten sind, insbesondere durch ein Doppelschrägkugellager, wobei gegebenenfalls as Wälzlager (52) einem Außenring (16) der Wellenhülse (12) anliegt, dem anderseits eine der Dichtscheiben (80a) aus Siliziumkarbid zugeordnet ist.

14. Vorrichtung nach Anspruch 11 oder 13, **dadurch gekennzeichnet, dass** eine Dichtscheibe (80ₐ) in einem sich von dem Außenring (16) weg axial stufenweise erweiternden Abschnitt (51) des Ringraums (50) lagert, dem der Verschlussring (60) mit der anderen Dichtscheibe (80) zugeordnet ist, wobei gegebenenfalls zwischen der Außenfläche der Dichtscheibe (80) und dem benachbarten Verschlussring (60) ein Radialspalt (17) verläuft.

15. Vorrichtung nach Anspruch 14, **dadurch gekennzeichnet, dass** an den Radialspalt (17) einerseits ein axialer Ringspalt (77) zwischen der Welle (10) und den Dichtelementen (70) anschließt sowie anderseits ein axialer Ringspalt (13), der die benachbarte Dichtscheibe (80) untergreift und/oder, dass am radial äußeren Ende des Radialspaltes (17) eine Anschlagfläche (69) vorgesehen ist, an welche ein äußerer Ringspalt (21) angrenzt, der achsparallel verläuft, wobei gegebenenfalls die Dichtscheibe (80) durch wenigstens einen achsparallelen Mitnehmerstift (67) an die Mittelwand (63) des Verschlussrings (60) angeschlossen ist.

16. Vorrichtung nach einem der Ansprüche 1 bis 15, **dadurch gekennzeichnet, dass** der mit einem Fluid beaufschlagten Seite eine teilweise mit einem Gas (G) gefüllte sowie mit einem Dichtspalt (92) versehene Kammer (90) vorgelagert ist, wobei gegebenenfalls die teilweise mit einem Gas (G) gefüllte sowie mit einem Dichtspalt (92) versehene Kammer (90) dem magnetofluidischen Dichtungselement (70) am Träger- oder Verschlussring (60) vorgelagert ist.

17. Vorrichtung nach Anspruch 16, **dadurch gekennzeichnet, dass** die Breite (q₃) des Dichtspaltes (92) größer ist als die Breite (q₂) des Dichtelements (70) des Dichtspaltes (77) am Träger- oder Verschlussring (60) zur Welle (10) hin, wobei gegebenenfalls das Verhältnis zwischen der Breite (q₂) des Dichtspaltes (77), der Breite (q₃) des Dichtspaltes (77) der Kammer (90) sowie dem inneren Außendurchmesser (f₂) der Kammer (90) bzw. der äußeren Kammerwand (94) von 1 zu 1,2 zu 1,5 beträgt.

18. Vorrichtung nach Anspruch 16 oder 17, **dadurch gekennzeichnet, dass** der Kammer (90) ein Hilfsanschluss für Inertgas zugeordnet und/oder der Querschnitt der Kammer (90) nach außen hin erweitert ist.

19. Verfahren zum Führen zumindest zweier Strömungsmittel unterschiedlichen Druckes mit einer Welle od. dgl. kraftübertragendem Organ sowie einem druckisolierenden Element wie einem die Welle od.dgl. umgebenden Gehäuse, zwischen dem kraftübertragenden Organ (10) und dem druckisolierenden Element in durch jeweils ein Dichtungselement (70, 70ₐ) begrenzten Räumen (90, 90ₐ; 98) Fluide (A, B) unterschiedlichen Druckes und zwischen diesen in einem Raum (96) ein Hilfsfluid (H) gehalten werden, wobei wenigstens eines der Dichtungselemente (70, 70a) leckage frei ausgebildet ist, und wobei in dem Hilfsfluid (H) zwei Druckbereiche hergestellt werden sowie der Teilbereich für den höheren Druck des Hilfsfluids (H) dem Raum (90ₐ) für das Fluid (A) höheren Druckes zugeordnet wird, **dadurch gekennzeichnet, dass** die Druckdifferenz innerhalb des Hilfsfluids (H) durch Relativbewegung geometrischer Elemente erzeugt wird, die der Welle (10) einerseits und dem druckisolierenden Element anderseits zugeordnet sind und eine Fördereinrichtung (100) bilden.

20. Verfahren nach Anspruch 19, **dadurch gekennzeichnet, dass** der Raum (96) für das Hilfsfluid (H) beidseits zu den Räumen (90, 90ₐ; 98) für die Fluide (A, B) durch magnetofluidische Dichtungselemente (70, 70ₐ) hermetisch abgedichtet wird und/oder, dass der Raum (96) für das Hilfsfluid (H) vor dieser mit einem Vakuum beaufschlagt wird.

21. Verfahren nach Anspruch 19, **dadurch gekennzeichnet, dass** dem Raum (90, 90ₐ) höheren Drucks ein Fördermedium sowie dem Raum (98) niederen Drucks Umgebungsluft zugeführt wird, wobei gegebenenfalls die erzeugbare Druckdifferenz zumindest dem maximal auftretenden Differenzdruck zwischen den Fluiden (A, B) entspricht oder, dass die Leistung der die Druckdifferenz erzeugenden Mittel geregelt wird.

22. Verfahren nach einem der Ansprüche 19 bis 21, **dadurch gekennzeichnet, dass** durch Dichtscheiben (80, 80ₐ), die zwischen sich spiralartige Rillen bzw. Vertiefungen (86) begrenzen, eine Förderwirkung für das Hilfsfluid (H) auf gebaut wird, wobei gegebenenfalls die Förderwirkung der Dichtscheiben (80, 80ₐ) durch Erhöhung von deren Druck sowie des Abstandes zueinander erhöht wird.

23. Verfahren nach einem der Ansprüche 19 bis 22, **dadurch gekennzeichnet, dass** in einer dem Dichtungselement (70) vorgelagerten sowie ein Gas enthaltenden Kammer (90) das Gasvolumen im Betrieb im Bereich des Dichtspaltes (77) zwischen Dichtungselement und Welle (10) konzentrisch um diese gesammelt sowie durch den Betriebsdruck zusammengedrückt wird.

## Claims

1. Device for guiding at least two flow media of different pressures comprising a shaft or similar force-transmitting member and a pressure-insulating element such as a housing surrounding the shaft or the like, spaces (90, 90ₐ; 96; 98) which are located side by side in the axial direction and defined between the shaft (10) or similar force-transmitting member and the pressure-insulating element by sealing elements (70, 70ₐ), at least one of the sealing elements (70, 70ₐ) being designed to be leak-free and two spaces (90, 90ₐ; 98) for fluids (A, B) of different pressures flanking a space (96) for an auxiliary fluid (H), the space (96) for the auxiliary fluid (H) being divided by an apparatus (100) into two sub-spaces (96ₐ, 96_{b}) for two different pressure regions, and comprising means for producing a pressure difference between the sub-spaces (96ₐ, 96_{b}), the means being a pumping apparatus (100), **characterised in that** the pumping apparatus (100) is arranged within the sub-spaces (96a, 96b) and comprises geometric parts which can be moved relative to one another and are associated with the pressure-insulating element and the force-transmitting member (10).

2. Device according to claim 1, **characterised in that** a pumping medium is associated with the space (90ₐ) of relatively high pressure and ambient air is associated with the space (98) of relatively low pressure.

3. Device according to either claim 1 or claim 2, **characterised by** a magnetofluidic sealing element (70, 70ₐ) for limiting the space (96) for the auxiliary fluid (H), the auxiliary fluid (H) preferably being a carrier oil of the magnetofluid associated with the sealing element (70, 70ₐ), optionally a silicone oil.

4. Device according to either claim 1 or claim 2, **characterised in that** the space (96) for the auxiliary fluid (H) comprises two ports (33), one of which is designed to produce a vacuum and the other of which is designed as a passage for the auxiliary fluid (H), or **in that** the sub-space (96ₐ) for the relatively high pressure of the auxiliary fluid (H) is associated with the space (90ₐ) for the fluid (A) of relatively high pressure, membrane-like sealing elements for limiting the space (96) for the auxiliary fluid (H) optionally being provided.

5. Device according to any of claims 1 to 4, **characterised by** means for producing a pressure difference between the sub-spaces (96a, 96b), which means are designed such that the producible pressure difference corresponds to at least the maximum differential pressure between the fluids (A, B), means preferably being provided with which the pressure difference between the maximum pressure of the auxiliary fluid (H) and the pressure of the fluid having the relatively high pressure can be adjusted towards zero, preferably members for adjusting the power of the means producing a pressure difference.

6. Device according to claim 5, **characterised by** members (97, 99) for adjusting a backflow from the sub-space (96ₐ) of relatively high pressure of the auxiliary fluid (H) to the sub-space (96_{b}) of relatively low pressure and/or by a line (99) provided between the sub-spaces (96ₐ, 96_{b}) for the auxiliary fluid (H) and having a valve-like overflow apparatus (97).

7. Device according to any of claims 1 to 6, **characterised in that** the volume at least of the space (96) for the auxiliary fluid (H) is variable and/or the volume at least of the sub-space (96_{b}) for the relatively low pressure region of the auxiliary fluid (H) is variable.

8. Device according to any of claims 3 to 7, **characterised in that** a magnetofluidic sealing element (70, 70ₐ) extends on either side of the space (96) for the auxiliary fluid (H) between the force-transmitting member (12) and the pressure-insulating element (24).

9. Device according to any of claims 1 to 8, **characterised in that** the sealing element (70, 70ₐ) contains at least one permanent magnet (74) in a ring (76) and a magnetofluid (75) associated with the force-transmitting member or the shaft (10) at an annular gap (77), the permanent magnet (74) optionally being part of a magnetic seal (70) which forms the sealing element and which, by means of the ring (76), surrounds the shaft (10), the magnetic field of the annular permanent magnet (70) optionally being concentrated onto the annular gap (77) by means of associated pole pieces (73).

10. Device according to claim 9, **characterised by** permanent magnets (70) magnetised in the axial direction on the high-pressure side in a carrier or locking ring (60) made of non-magnetic material or by at least two concentric magnetic seals (70, 70ₐ), the cross-sections of which are separated by at least one axially parallel spacer ring (79), a bellows (68) optionally resting on the locking ring (60), the other end of which bellows rests on the pressure-bearing element, and the bellows (68) preferably consisting of metal material and preferably being surrounded on its radial outer side by a holding ring (56), and/or being supported against a front ring (54) which is fixed to the housing bushing (26).

11. Device according to claim 10, **characterised in that** the locking ring (60) contains at least one sealing disc (80) as part of mechanical sealing system comprising at least two sealing discs (80, 80ₐ) having a central opening (82), the sealing disc (80, 80ₐ) optionally being made of silicon carbide, the sealing discs (80, 80ₐ) preferably resting against each other via contact faces (84) and at least one sealing disc (80ₐ) advantageously comprising, in the contact face (84), spiral-like grooves or indentations (86) of low depth (c) which extend in a curved manner from the disc edge (81) to the disc centre, end with spacing from the central opening (82) and are overlapped by the contact face of the other sealing disc (80).

12. Device according to any of claims 1 to 11, **characterised in that** at least a shaft sleeve (12) surrounding the shaft (10) and a housing bushing (26) which is coaxial with said shaft sleeve each consist of a non-magnetic material and between these at least two of the magnetofluidic sealing elements (70, 70ₐ) which surround the shaft are provided, the shaft sleeve (12) preferably being statically sealed against the shaft (12) and the housing bushing (26) being statically sealed against the housing by O-rings (20), and/or the shaft (10) consists of ferromagnetic material.

13. Device according to claim 12, **characterised in that** the force-transmitting member or the shaft (12) or the shaft sleeve (12) and the pressure-insulating elements or the housing or the housing bushing (26) are held with defined axial spacing such that they can rotate concentrically by rolling bearings (52) arranged radially with respect to the longitudinal axis (M₁) of the shaft sleeve, in particular by a double angular ball bearing, the rolling bearing (52) optionally resting on an outer ring (16) of the shaft sleeve (12), one of the sealing discs (80a) made of silicon carbide being associated with the other side of said outer ring.

14. Device according to either claim 11 or claim 13, **characterised in that** a sealing disc (80ₐ) is mounted in a portion (51) of the annular space (50), which portion gradually widens axially away from the outer ring (16) and with which the locking ring (60) having the other sealing disc (80) is associated, a radial gap (17) optionally extending between the outer face of the sealing disc (80) and the adjacent locking ring (60).

15. Device according to claim 14, **characterised in that** the radial gap (17) is adjoined on one side by an axial annular gap (77) between the shaft (10) and the sealing elements (70) and on the other side by an axial annular gap (13) which extends below the adjacent sealing disc (80), and/or **in that** a stop face (69) is provided at the radially outer end of the radial gap (17), which stop face is adjoined by an outer annular gap (21) which extends axially parallel, the sealing disc (80) optionally being connected to the central wall (63) of the locking ring (60) by at least one axially parallel driving pin (67).

16. Device according to any of claims 1 to 15, **characterised in that** a chamber (90) which is filled in part with a gas (G) and provided with a sealing gap (92) is located upstream of the side charged with a fluid, the chamber (90) which is filled in part with a gas (G) and provided with a sealing gap optionally being located upstream of the magnetofluidic sealing element (70) at the carrier or locking ring (60).

17. Device according to claim 16, **characterised in that** the width (q₃) of the sealing gap (92) is greater than the width (q₂) of the sealing element (70) of the sealing gap (77) at the carrier or locking ring (60) towards the shaft (10), the ratio between the width (q₂) of the sealing gap (77), the width (q₃) of the sealing gap (77) of the chamber (90) and the inner outside diameter (f₂) of the chamber (90) or the chamber outer wall (94) is from 1 to 1.2 to 1.5.

18. Device according to either claim 16 or claim 17, **characterised in that** an auxiliary port for inert gas is associated with the chamber (90) and/or the cross-section of the chamber (90) is widened outwards.

19. Method for guiding at least two flow media of different pressures using a shaft or similar force-transmitting member and a pressure-insulating element such as a housing surrounding the shaft or the like, between the force-transmitting member (10) and the pressure-insulating element fluids (A, B) of different pressures being held in spaces (90, 90ₐ; 98) which are each limited by a sealing element (70, 70ₐ) and between these an auxiliary fluid (H) being held in a space (96), at least one of the sealing elements (70, 70ₐ) being designed to be leak-free, and two pressure regions being established in the auxiliary fluid (H) and the sub-region for the relatively high pressure of the auxiliary fluid (H) being associated with the space (90ₐ) for the fluid (A) of relatively high pressure, **characterised in that** the pressure difference within the auxiliary fluid (H) is produced by relative movement of geometric elements which are associated with the shaft (10) on one hand and the pressure-insulating element on the other hand and form a pumping apparatus (100).

20. Method according to claim 19, **characterised in that** the space (96) for the auxiliary fluid (H) is hermetically sealed on either side with respect to the spaces (90, 90ₐ; 98) for the fluids (A, B) by magnetofluidic sealing elements (70, 70ₐ), and/or **in that** a vacuum is applied to the space (96) for the auxiliary fluid (H) before it is charged with said auxiliary fluid.

21. Method according to claim 19, **characterised in that** a pumping medium is fed to the space (90, 90ₐ) of relatively high pressure and ambient air is fed to the space (98) of relatively low pressure, the producible pressure difference optionally corresponding to at least the maximum differential pressure between the fluids (A, B), or **in that** the power of the means producing the pressure difference is adjusted.

22. Method according to any of claims 19 to 21, **characterised in that** a pumping effect for the auxiliary fluid (H) is established by sealing discs (80, 80ₐ) which define between them spiral-like grooves or indentations (86), the pumping effect of the sealing discs (80, 80ₐ) optionally being increased by increasing the pressure thereof and the mutual spacing.

23. Method according to any of claims 19 to 22, **characterised in that**, in a chamber (90) located upstream of the sealing element (70) and containing a gas, the gas volume is collected in operation in the region of the sealing gap (77) between sealing element and shaft (10) concentrically about said shaft and is compressed by the operating pressure.

## Revendications

1. Dispositif de guidage d'au moins deux fluides de différentes pressions, comprenant un arbre ou un organe similaire de transmission de force ainsi qu'un élément isolant de la pression tel qu'un carter entourant l'arbre ou analogue, des espaces (90, 90ₐ ; 96 ; 98) définis entre l'arbre (10) ou un organe similaire de transmission de force et l'élément isolant de la pression par des éléments d'étanchéité (70, 70ₐ) et disposés l'un à côté de l'autre dans la direction axiale, dans lequel dispositif au moins l'un des éléments d'étanchéité (70, 70ₐ) est conformé sans fuite et deux espacements (90, 90ₐ ; 98) pour les fluides (A, B) de différentes pressions flanquent un espace (96) pour un fluide auxiliaire (H), dans lequel l'espace (96) pour le fluide auxiliaire (H) est divisé par un dispositif (100) en deux espaces partiels (96ₐ, 96_{b}) pour deux zones de pressions différentes, ainsi que des moyens permettant de produire une différence de pression entre les espaces partiels (96ₐ, 96_{b}), dans lequel les moyens sont un dispositif de transport (100),
**caractérisé en ce que** :
le dispositif de transport (100) est aménagé à l'intérieur des espaces partiels (96ₐ, 96_{b}) et présente des parties géométriques déplaçables l'une par rapport à l'autre et affectées à l'élément isolant de la pression et à l'organe de transmission de force (10).

2. Dispositif selon la revendication 1, **caractérisé en ce qu'**un milieu de transport est affecté à l'espace (90ₐ) de pression plus élevée et de l'air ambiant à l'espace (98) de plus faible pression.

3. Dispositif selon la revendication 1 ou la revendication 2, **caractérisé par** un élément d'étanchéité magnétofluidique (70, 70ₐ) pour délimiter l'espace (96) pour le fluide auxiliaire (H), dans lequel le fluide auxiliaire (H) est de préférence une huile véhiculaire du magnétofluide affecté à l'élément d'étanchéité (70, 70ₐ), éventuellement une huile de silicone.

4. Dispositif selon la revendication 1 ou la revendication 2, **caractérisé en ce que** l'espace (96) pour le fluide auxiliaire (H) présente deux raccords (33) dont l'un est conformé pour produire un vide et l'autre comme passage pour le fluide auxiliaire (H), l'espace partiel (96ₐ) pour la pression plus élevée du fluide auxiliaire (H) est affecté à l'espace (90ₐ) pour le fluide (A) de pression plus élevée, dans lequel il est prévu éventuellement des éléments d'étanchéité de type membranaire pour délimiter l'espace (96) pour le fluide auxiliaire (H).

5. Dispositif selon l'une quelconque des revendications 1 à 4, **caractérisé par** des moyens pour la production d'une différence de pression entre les espaces partiels (96ₐ, 96_{b}) conformés de manière que la différence de pression qui peut être atteinte corresponde au moins à la pression différentielle qui apparaît au maximum entre les fluides (A, B), dans lequel il est de préférence prévu des moyens par lesquels la différence de pression entre la pression maximale du fluide auxiliaire (H) et la pression du fluide de pression plus élevée peut être réglée à zéro, de préférence des organes permettant de réguler la capacité des moyens produisant la différence de pression.

6. Dispositif selon la revendication 5, **caractérisé par** des organes (97, 99) pour réguler un courant de reflux de l'espace partiel (96ₐ) de pression plus élevée du fluide auxiliaire (H) vers l'espace partiel (96_{b}) de plus faible pression et/ou par une conduite (99) prévue entre les deux espaces partiels (96ₐ, 96_{b}) pour le fluide auxiliaire (H) avec un dispositif de trop-plein de type soupape (97).

7. Dispositif selon l'une quelconque des revendications 1 à 6, **caractérisé en ce que** le volume au moins de l'espace (96) pour le fluide auxiliaire (H) est conformé de manière à pouvoir être modifié et/ou au moins l'espace partiel (96ₐ) pour la zone de plus faible pression du fluide auxiliaire (H) est conformé de manière à pouvoir modifier son volume.

8. Dispositif selon l'une quelconque des revendications 3 à 7, **caractérisé en ce que** s'étend, des deux côtés de l'espace (96) pour le fluide auxiliaire (H), entre l'organe de transmission de force (12) et l'élément isolant de la pression (24), un élément d'étanchéité magnétofluidique (70, 70ₐ).

9. Dispositif selon l'une quelconque des revendications 1 à 8, **caractérisé en ce que** l'élément d'étanchéité (70, 70ₐ) contient au moins un aimant permanent (74) dans un anneau (76) ainsi qu'un magnétofluide (75) affecté à l'organe de transmission de force ou à l'arbre (10) dans un interstice annulaire (77), dans lequel, éventuellement, l'aimant permanent (74) fait partie d'un joint étanche magnétique (70) formant l'élément d'étanchéité, lequel joint entoure avec l'anneau (76) l'arbre (10), dans lequel éventuellement le champ magnétique de l'aimant permanent annulaire (70) est concentré au moyen d'une pièce polaire correspondante (73) sur l'interstice annulaire (77).

10. Dispositif selon la revendication 9, **caractérisé par** des aimants permanents (70) magnétisés dans la direction axiale du côté haute pression dans un anneau de support ou de fermeture (60) formé d'un matériau non magnétique ou par au moins deux joints étanches magnétiques concentriques (70, 70ₐ), dont les sections transversales sont séparées par au moins un anneau d'espacement (79) parallèle à l'axe, dans lequel, éventuellement, s'applique sur l'anneau de fermeture (60) un soufflet (68), qui s'applique d'autre part à l'élément supportant la pression et le soufflet (68) est constitué de préférence d'un matériau métallique et est entouré sur son côté radial externe de préférence d'un anneau de retenue (56), et/ou s'appuie contre un anneau frontal (54) se fixant sur la fourrure (26) du carter.

11. Dispositif selon la revendication 10, **caractérisé en ce que** l'anneau de fermeture (60) contient au moins un disque d'étanchéité (80) en tant que partie d'un système d'étanchéité mécanique contenant au moins deux disques d'étanchéité (80, 80ₐ) avec un percement central (82), dans lequel le disque d'étanchéité (80, 80ₐ) est éventuellement formé de carbure de silicium, dans lequel les disques d'étanchéité (80, 80ₐ) s'appuient l'un sur l'autre de préférence par des faces de contact (84) et, avantageusement, au moins un disque d'étanchéité (80ₐ) présente des rainures ou des cavités (86) de faible profondeur (c) en forme de spirale s'étendant de façon incurvée dans la surface de contact (84) du bord (81) du disque au centre du disque, lesquelles se terminent à distance du percement central (82) et sont chevauchées par la surface de contact de l'autre disque d'étanchéité (80).

12. Dispositif selon l'une quelconque des revendications 1 à 11, **caractérisé en ce qu'**au moins une douille d'arbre (12) entourant l'arbre (10) et une fourrure de carter (26) coaxiale avec celle-ci sont constituées respectivement d'un matériau non magnétique et il est prévu entre celles-ci au moins deux éléments d'étanchéité magnétofluidiques (70, 70ₐ) entourant l'arbre, dans lequel la douille d'arbre (12) est de préférence étanchée de manière statique contre l'arbre (12) et la fourrure de carter (26) contre le carter par des joints toriques (20) et/ou l'arbre (10) est constitué d'un matériau ferromagnétique.

13. Dispositif selon la revendication 12, **caractérisé en ce que** l'organe de transmission de force ou l'arbre (12) ou la douille d'arbre (12) et l'élément isolant de la pression ou le carter ou la fourrure de carter (26) sont supportés concentriquement à rotation à distance axiale définie par un palier à roulement (52) agencé radialement par rapport à l'axe longitudinal (M₁) de la douille d'arbre, en particulier par un roulement à billes à double biseau, dans lequel éventuellement le palier à roulement (52) s'appuie sur un anneau externe (16) de la douille d'arbre (12), à laquelle est d'autre part affecté l'un des disques d'étanchéité (80ₐ) formé de carbure de silicium.

14. Dispositif selon la revendication 11 ou la revendication 13, **caractérisé en ce qu'**un disque d'étanchéité (80ₐ) est logé dans une section (51) de l'espace annulaire (50) s'écartant de l'anneau externe (16) axialement par gradins, à laquelle section est affecté l'anneau de fermeture (60) avec l'autre disque d'étanchéité (80), dans lequel éventuellement un interstice radial (17) s'étend entre la face externe du disque d'étanchéité (80) et l'anneau de fermeture adjacent (60).

15. Dispositif selon la revendication 14, **caractérisé en ce qu'**à l'interstice radial (17) se raccordent, d'un côté, un interstice annulaire axial (77) entre l'arbre (10) et les éléments d'étanchéité (70) et, de l'autre côté, un interstice annulaire axial (13), qui s'accroche en dessous du disque d'étanchéité adjacent (80) et/ou il est prévu à l'extrémité radialement externe de l'interstice radial (17), une surface de butée (69), à laquelle est attenant un interstice annulaire externe, qui s'étend parallèlement à l'axe, et dans lequel éventuellement le disque d'étanchéité (80) est raccordé à la paroi centrale (63) de l'anneau de fermeture (60) par au moins une broche d'entraînement (67) parallèle à l'axe.

16. Dispositif selon l'une quelconque des revendications 1 à 15, **caractérisé en ce que**, en amont du côté alimenté par un fluide est montée une chambre (90) partiellement remplie d'un gaz (G) et pourvue d'un interstice étanche (92), dans lequel éventuellement la chambre (90) partiellement remplie d'un gaz (G) et pourvue d'un interstice étanche (92) est montée en amont de l'élément d'étanchéité magnétofluidique (70) sur l'anneau de support ou de fermeture (60).

17. Dispositif selon la revendication 16, **caractérisé en ce que** la largeur (q₃) de l'interstice étanche (92) est plus grande que la largeur (q₂) de l'élément d'étanchéité (70) de l'interstice étanche (77) sur l'anneau de support ou de fermeture (60) jusqu'à l'arbre (10), dans lequel éventuellement le rapport entre la largeur (q₂) de l'interstice étanche (77), la largeur (q₃) de l'interstice étanche (77) de la chambre (90) ainsi qu'entre le diamètre extérieur interne (f₂) de la chambre (90) ou de la paroi externe (94) de la chambre se situe à 1:1,2:1,5.

18. Dispositif selon la revendication 16 ou la revendication 17, **caractérisé en ce qu'**à la chambre (90) est affecté un raccord auxiliaire pour un gaz inerte et/ou la section transversale de la chambre (90) est évasée vers l'extérieur.

19. Procédé de guidage d'au moins deux fluides de pressions différentes, comprenant un arbre ou un organe similaire de transmission de force ainsi qu'un élément isolant de la pression comme un carter entourant l'arbre ou analogue, entre l'organe de transmission de force (10) et l'élément isolant de la pression, dans des espaces (90, 90ₐ ; 98) délimités par respectivement un élément d'étanchéité (70, 70ₐ) sont maintenus des fluides (A, B) de pressions différentes et, entre ceux-ci, dans un espace (96) un fluide auxiliaire (H), dans lequel au moins l'un des éléments d'étanchéité (70, 70ₐ) est conformé sans fuite, et dans lequel deux zones de pression sont ménagées dans le fluide auxiliaire (H) et la zone partielle pour la pression plus élevée du fluide auxiliaire (H) est affectée à l'espace (90ₐ) pour le fluide (A) de pression plus élevée, **caractérisé en ce que** la différence de pression à l'intérieur du fluide auxiliaire (H) est produite par un déplacement relatif d'éléments géométriques, qui sont affectés à l'arbre (10), d'une part, et à l'élément isolant de la pression, d'autre part, et forment un dispositif de transport (100).

20. Dispositif selon la revendication 19, **caractérisé en ce que** l'espace (96) pour le fluide auxiliaire (H) est étanché hermétiquement des deux côtés des espaces (90, 90ₐ ; 98) pour les fluides (A, B) par des éléments d'étanchéité magnétofluidiques (70, 70ₐ) et/ou l'espace (96) pour le fluide auxiliaire (H) est soumis à un vide avant d'être alimenté par celui-ci.

21. Procédé selon la revendication 19, **caractérisé en ce qu'**il est acheminé à l'espace (90, 90ₐ) de pression plus élevée un milieu de transport ainsi qu'à l'espace (98) de plus faible pression de l'air ambiant, dans lequel éventuellement la différence de pression qui peut être atteinte correspond au moins à la différence de pression qui apparaît au maximum entre les fluides (A, B) ou la capacité du moyen produisant la différence de pression est régulée.

22. Procédé selon l'une quelconque des revendications 19 à 21, **caractérisé en ce que**, sous l'effet de disques d'étanchéité (80, 80a) qui délimitent entre eux des rainures ou des cavités en forme de spirale (86), il s'instaure un effet de transport pour le fluide auxiliaire (H), dans lequel éventuellement l'effet de transport des disques d'étanchéité (80, 80ₐ) est renforcé par l'augmentation de leur pression ainsi que de la distance qui les sépare.

23. Procédé selon l'une quelconque des revendications 19 à 22, **caractérisé en ce que**, dans une chambre (90) montée en amont de l'élément d'étanchéité (70) et contenant un gaz, le volume de gaz s'accumule en service dans la zone de l'interstice étanche (77) entre l'élément d'étanchéité et l'arbre (10) concentriquement autour de ceux-ci et est comprimé par la pression de fonctionnement.
